# EUROPÄISCHE PATENTSCHRIFT

(11) **EP 3 810 483 B1**
(45) Veröffentlichungstag und Bekanntmachung des Hinweises auf die Patenterteilung: **24.01.2024**
(21) Anmeldenummer: 19733692.8
(22) Anmeldetag: 18.06.2019
(51) Int. Cl.: F16H 25/24, B62D 1/181, F16H 25/20

(54) **KOPPLUNGSELEMENT ZUR ANBRINGUNG AN EINER GEWINDESPINDEL, GEWINDESPINDEL MIT EINEM KOPPLUNGSELEMENT, SPINDELTRIEB MIT EINER GEWINDESPINDEL UND LENKSÄULE FÜR EIN KRAFTFAHRZEUG MIT EINEM SPINDELTRIEB**
COUPLING ELEMENT FOR ATTACHING TO A LEADSCREW, LEADSCREW HAVING A COUPLING ELEMENT, SPINDLE DRIVE HAVING A LEADSCREW, AND STEERING COLUMN FOR A MOTOR VEHICLE HAVING A SPINDLE DRIVE
ÉLÉMENT D'ACCOUPLEMENT DESTINÉ À ÊTRE MONTÉ SUR UNE BROCHE FILETÉE, BROCHE FILETÉE MUNIE D'UN ÉLÉMENT D'ACCOUPLEMENT, MÉCANISME À BROCHE MUNI D'UNE BROCHE FILETÉE ET COLONNE DE DIRECTION D'UN VÉHICULE AUTOMOBILE MUNIE D'UN MÉCANISME À BROCHE

(30) Priorität: 20.06.2018 DE 102018210045
(43) Veröffentlichungstag der Anmeldung: 28.04.2021
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT); SPECHT, Jean-Pierre, 9469 Haag (CH)
(74) Vertreter: thyssenkrupp Intellectual Property GmbH
(86) Internationale Anmeldenummer: PCT/EP2019/066072
(87) Internationale Veröffentlichungsnummer: WO 2019/243356

(56) Entgegenhaltungen:
- DE-A1-102007 041 100
- DE-A1-102010 003 188
- DE-A1-102011 083 190

## Beschreibung

### Stand der Technik

Die Erfindung betrifft ein Kopplungselement zur Anbringung an einer Gewindespindel, das einen Aufnahmeabschnitt aufweist, der einstückig mit einem Koppelabschnitt ausgebildet ist, wobei der Aufnahmeabschnitt sich hohlzylindrisch längs einer Achse erstreckt mit einer axialen Aufnahmeöffnung zur Aufnahme der Gewindespindel, und der Koppelabschnitt quer zur Achse relativ zum Aufnahmeabschnitt abgeflacht ist und ein Verbindungsmittel aufweist, wobei der Aufnahmeabschnitt und der Koppelabschnitt aus einem durchgehenden, einstückigen Rohrabschnitt ausgebildet sind, wobei der Koppelabschnitt einen Pressabschnitt aufweist, in dem der Rohrabschnitt quer zur Achse plastisch flach verquetscht ist, wobei sich die Gewindespindel ausschließlich im Bereich des Aufnahmeabschnitts erstreckt. Eine Gewindespindel mit einem derartigen Kopplungselement, ein Spindeltrieb mit einer derartigen Gewindespindel sowie eine Lenksäule für ein Kraftfahrzeug, die als Verstellantrieb einen derartigen Spindeltrieb aufweist, sind ebenfalls Gegenstand der Erfindung.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit an der Fahrzeugkarosserie gehalten ist. Dadurch, dass die Stelleinheit in einer mit der Trageinheit verbundenen Mantel-einheit, auch als Führungskasten oder Kastenschwinge bezeichnet, in Richtung der Längsachse teleskopartig verschiebbar aufgenommen ist, kann eine Längsverstellung erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längs- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur Verstellung der Stelleinheit relativ zur Trageinheit einen motorischen Verstellantrieb mit einer Antriebseinheit vorzusehen, die einen elektrischen Stellmotor umfasst, der - in der Regel über ein Getriebe - mit einem Spindeltrieb verbunden ist, der eine in eine Spindelmutter eingeschraubte Gewindespindel umfasst. Durch die Antriebseinheit sind die Gewindespindel und die Spindelmutter gegeneinander um eine Achse, nämlich die Gewindespindelachse oder kurz Spindelachse, drehend antreibbar, wodurch die Gewindespindel und die Spindelmutterje nach Drehrichtung in Richtung der Gewindespindelachse translatorisch aufeinander zu oder voneinander weg bewegt werden können. In einer Ausführungsform ist die Gewindespindel von der Antriebseinheit, die feststehend mit der Stelleinheit oder der Trageinheit verbunden ist, um ihre Spindelachse drehend antreibbar und greift in die Spindelmutter ein, die an der Trageinheit oder alternativ an der Stelleinheit bezüglich Drehung um die Gewindespindelachse feststehend angebracht ist. In Richtung der Spindelachse stützt sich die Gewindespindel an der Trageinheit oder der Stelleinheit ab, und die Spindelmutter entsprechend an der Stelleinheit oder alternativ an der Trageinheit, so dass ein rotatorischer Antrieb der Gewindespindel eine translatorische Verstellung von Trageinheit und Stelleinheit relativ zueinander in Richtung der Spindelachse bewirkt. Diese Ausführung wird daher auch als Rotationsspindelantrieb bezeichnet.

In einer alternativen Ausführungsform ist die Gewindespindel bezüglich Drehung um ihre Spindelachse unverdrehbar mit der Trageinheit oder alternativ mit der Stelleinheit gekoppelt und die Spindelmutter ist drehbar, aber in Richtung der Spindelachse feststehend entsprechend an der Stelleinheit oder alternativ an der Trageinheit gelagert. Der Spindeltrieb stützt sich dabei über ein drehfest mit der Gewindespindel verbundenes Kopplungselement an der Trageinheit oder an der Stelleinheit ab, und die Spindelmutter entsprechend an der Stelleinheit oder an der Trageinheit, so dass die Gewindespindel in Richtung der Spindelachse translatorisch verschiebbar ist, indem die Spindelmutter von der Antriebseinheit um die Spindelachse drehend angetrieben wird. Diese Ausführung wird auch als Tauchspindelantrieb bezeichnet.

Durch den rotatorischen Antrieb der Spindelmutter wird eine translatorische Verstellung von Trageinheit und Stelleinheit relativ zueinander in Richtung der Spindelachse bewirkt. In beiden Ausführungen bildet der Spindeltrieb einen zwischen Trageinheit und Stelleinheit wirksamen motorischen Verstellantrieb, durch den die Stelleinheit zur Verstellung relativ zur Trageinheit verstellt werden kann, wobei die Gewindespindel und die Spindelmutter relativ zueinander (rotatorisch und translatorisch) motorisch bewegbar sind.

Zur Realisierung einer Längsverstellung der Stelleinheit in Richtung der Längsachse der Lenkspindel kann ein Spindeltrieb eines Verstellantriebs zwischen der Stelleinheit und einer diese axial längsverschieblich aufnehmenden Manteleinheit, auch Führungskasten oder Kastenschwinge genannt, angeordnet sein, welche mit der Trageinheit verbunden ist, und wobei die Spindelachse im Wesentlichen parallel zur Längsachse ausgerichtet sein kann. Zur Höhenverstellung kann ein Spindeltrieb zwischen der Trageinheit und einer daran höhenverschwenkbar gelagerten Stelleinheit oder Manteleinheit, in der die Stelleinheit aufgenommen ist, angeordnet sein. An einer Lenksäule können eine motorische Längs- und Höhenverstellung einzeln oder in Kombination ausgebildet sein.

Zur Verbindung mit dem durch den Spindeltrieb bewegten Bauteil der Lenksäule weist die Gewindespindel ein Kopplungselement auf, der beispielsweise als Anbindungsabschnitt in Form eines Gelenkkopfes ausgebildet sein kann. Ein solcher Gelenkkopf kann durch eine entsprechende Bearbeitung der Gewindespindel selbst realisiert sein, oder auch in Form eines zunächst separat gefertigten Kopplungselements, welches fest an einem Ende der Gewindespindel angebracht wird, wie beispielsweise im Stand der Technik für einen Verstellantrieb für eine Lenksäule eines Kraftfahrzeugs in der DE 10 2017 207 561 A1 beschrieben. Ein separat bereitgestelltes, nachträglich an der Gewindespindel befestigtes Kopplungselement ist im Hinblick auf eine rationelle und flexible Fertigung vorteilhaft.

Ein bekanntes Kopplungselement weist als funktionale Elemente einen hülsen- oder rohrförmigen Aufnahmeabschnitt auf, in dem ein freies Ende der Gewindespindel aufgenommen und festgelegt werden kann, und einen Koppelabschnitt, beispielsweise einen Gelenkkopf, der eine relativ zum Aufnahmeabschnitt abgeflachte Gelenklasche aufweist, die beispielsweise eine quer durchgehende Gelenkbohrung zur gelenkigen Ankopplung an die Lenksäule aufweist, Im Stand der Technik ist die einstückige Ausbildung eines derartigen Kopplungselements bekannt, beispielsweise als Fließpress- bzw. Pressformteil, welches eine hohe Maßhaltigkeit und Steifigkeit gewährleistet. Nachteilig ist der relativ hohe Investitionsaufwand der Fertigung sowie der hohe Arbeitsaufwand für Änderungen und Anpassungen, zum Beispiel hinsichtlich Abmessungen, Formgebung und Material.

Aus der DE 10 2007 041 100 A1 ist ein gattungsgemäßes Kopplungselement der eingangs genannten Art bekannt. Dieses erfordert jedoch eine aufwendige Fertigung.

Angesichts der vorangehend erläuterten Problematik ist es eine Aufgabe der vorliegenden Erfindung, ein Kopplungselement zur Verfügung zu stellen, welches rationeller und flexibler gefertigt werden kann, sowie eine damit ausgerüstete Gewindespindel, ein Spindeltrieb mit einer derartigen Gewindespindel sowie eine Lenksäule für ein Kraftfahrzeug, die als Verstellantrieb einen derartigen Spindeltrieb aufweist.

### Darstellung der Erfindung

Diese Aufgabe wird erfindungsgemäß gelöst durch ein Kopplungselement mit den Merkmalen des Anspruchs 1 oder des Anspruchs 12, eine Gewindespindel für einen Spindeltrieb gemäß Anspruch 8 oder Anspruch 13, einen Spindeltrieb gemäß Anspruch 10, sowie eine Lenksäule gemäß Anspruch 11 oder Anspruch 15. Ein Verfahren zur rationellen Fertigung eines Kopplungselements wird erfindungsgemäß in Anspruch 7 angegeben. Vorteilhafte Weiterbildungen ergeben sich aus den Unteransprüchen.

Erfindungsgemäß ist ein Kopplungselement der eingangs beschriebenen Art dadurch gekennzeichnet, dass der Pressabschnitt in einer Kontaktfläche gegeneinander anliegende Rohrwandungsabschnitte aufweist.

Der bevorzugt hohlzylindrische Rohrabschnitt bildet ein Halbzeug zur Ausbildung das erfindungsgemäße Kopplungselement. Der hohlzylindrische Rohrabschnitt ist bevorzugt ein kreiszylindrischer Rohrabschnitt ohne Vorverformungen. Dabei sind Querschnittsform und - abmessungen des Rohrabschnitts so gewählt, dass der eine Endabschnitt als Aufnahmeabschnitt des Kopplungselements dienen kann. Die eine freie Öffnung des Rohrabschnitts dient mit ihrem bevorzugt kreisrunden Innenquerschnitt als axiale Aufnahmeöffnung zur Aufnahme eines freien Endes der Gewindespindel. Alternativ ist es denkbar, dass der hohlzylindrische Rohrabschnitt einen mehreckigen Querschnitt hat, und beispielsweise als Vier-, Sechs- oder Achtkantrohr oder dergleichen ausgebildet ist.

In dem anderen Endbereich, welcher der vorgenannten freien Öffnung des Rohrabschnitts an dem einen Ende abgewandt ist, ist der Koppelabschnitt des Koppelelements (Kopplungselements )durch plastische Umformung des Rohrabschnitts ausgebildet. Erfindungsgemäß ist das rohrförmige, hohle Halbzeug in einer Umform- bzw. Pressrichtung quer zur Achsrichtung derart plastisch zusammengepresst, bis bezüglich der Achse innen einander gegenüberliegende Bereiche der Rohrwandung miteinander in Kontakt kommen und gegeneinander plastisch flachgedrückt werden, wodurch ein Pressabschnitt erzeugt wird, der im Wesentlichen die Form einer flachen Lasche hat. In diesem flach verquetschten Zustand erstrecken sich die in dem Pressabschnitt gegeneinander liegenden, nunmehr ebenen Abschnitte der vormaligen Rohrwandung parallel zur einer Ebene, der sogenannten Pressebene, die parallel zur Achse liegt. Dabei hat der Pressabschnitt einen flachen Vollquerschnitt, dessen die Dicke gemessen in Umformrichtung, also normal zur Pressebene, bevorzugt im Wesentlichen der doppelten Wandungsstärke der Rohrwandung entspricht. Es ist jedoch auch möglich, den Pressabschnitt über das Flachdrücken hinaus weiter zu verformen, d.h. plastisch weiter zusammen zu pressen, so dass die Dicke des Pressabschnitts kleiner ist als die zweifache Wandungsstärke des unverformten Rohrabschnitts.

Das Kopplungselement wird nur im Bereich des Pressabschnitts flach verquetscht. Dadurch, dass sich die Gewindespindel sich ausschließlich im Bereich des Aufnahmeabschnitts erstreckt, und nicht im Pressabschnitt, wird die Gewindespindel bei der Erzeugung des Pressabschnitts nicht flach zusammengepresst bzw. gequetscht. Der Pressabschnitt wird allein durch die flach zusammengequetschten Wandungen des Rohrabschnitts gebildet. Dadurch, dass nur der Rohrabschnitt plastisch flach zusammengequetscht wird, und nicht die Gewindespindel, ist zur plastischen Umformung zur Erzeugung des Pressabschnitts eine geringere Presskraft erforderlich, als zum flachen Zusammenpressen der Gewindespindel. Dadurch wird der Fertigungsaufwand gegenüber dem Stand der Technik reduziert, bei dem die Gewindespindel selbst im Bereich des Koppelelements flach gequetscht wird. Dabei ist ein weiterer Vorteil, dass der erfindungsgemäß nur aus dem Rohrabschnitt geformte Pressabschnitt eine geringere Masse haben kann, als ein flach gequetschter Abschnitt der Gewindespindel.

Durch einen einfachen plastischen Umformschritt, bevorzugt durch Kaltumformung, nämlich das ebene, flache Verquetschen von Hohl- bzw. Rohrmaterial, kann in dem Pressabschnitt die Grundform des Koppelabschnitts realisiert werden. Die hierzu erforderliche Umformenergie ist deutlich geringer als bei einer Ausformung des Koppelabschnitts und der Einformung der Aufnahmeöffnung mittels Massivumformung aus Vollmaterial, beispielsweise einem Stangenabschnitt, oder einem Abschnitt der Gewindespindel. Die Umformwerkzeuge zum Verquetschen können durch einfache, ebene Pressbacken realisiert werden, was deutlich weniger Aufwand erfordert, als individuell geformte Gesenke zur Massivumformung. Die Anpassung an die Verbindung mit einer Gewindespindel im Bereich des Aufnahmeabschnitts kann einfach durch Auswahl des Rohrmaterials erfolgen, welches als Standardprodukt zur Verfügung gestellt werden kann, insbesondere auch in unterschiedlichen Werkstoffen wie Stahl, Edelstahl, Buntmetall oder dergleichen. Die Verarbeitung unterschiedlicher Werkstoffe ist erfindungsgemäß ebenfalls ohne Probleme möglich, weil nur eine relative einfache Umformoperation zur Erzeugung des Pressabschnitts durch Verquetschen erforderlich ist.

Das Kopplungselement kann Stahl, Buntmetall, wie beispielsweise Messing, Bronze, Rotguss oder dergleichen, zusätzlich oder alternativ ein Kunststoffmaterial aufweisen. Durch die Wahl des Materials können unterschiedliche materialspezifische Eigenschaften für die Funktion des erfindungsgemäßen Kopplungselements genutzt werden, um dieses funktional zu optimieren. Beispielsweise können durch die plastische und elastische Verformbarkeit die Haltewirkung auf der Gewindespindel und/oder das Anschlagverhalten eingestellt werden.

In einer bevorzugten Ausführungsform kann der als Pressabschnitt ausgebildete Koppelabschnitt eines aus einem thermoplastischen Kunststoff gebildeten Kopplungselements thermisch mittels Warmumformen oder Heißpressen flach verquetscht sein. Alternativ kann dies auch mittels Ultraschallerwärmen mittels einer Sonotrode erfolgen. Mittels thermischer Fügeverfahren kann aus Kunststoff gebildetes Kopplungselement stoffschlüssig auf der Gewindespindel fixiert werden, beispielsweise mittels Ultraschall- oder Reibschweißen.

Bevorzugt kann das Kopplungselement ein elastisches Element umfassen. Das elastische Element kann durch Einsatz elastisch verformbaren Materials erreicht werden, wie einem Elastomer, Kunststoff oder einem Kork. Beispielsweise kann ein gummiartig verformbares Elastomer eingesetzt werden. Dadurch kann eine Dämpfung beim Anschlagen des Kopplungselements an einem Gegenanschlag zur Begrenzung des Verstellwegs realisiert werden. Das elastische Material kann abschnittweise aufgebracht sein, beispielsweise als Beschichtung oder angefügter Anschlagkörper. Beispielsweise kann das Kopplungselement einen metallischen Grundkörper, der den Aufnahmeabschnitt und den Koppelabschnitt umfasst, aufweisen, der mit einem elastischen Anteil aus einem weicheren Kunststoff- oder Gummimaterial verbunden ist, beispielsweise einer durchgehenden oder partiellen Beschichtung.

Der Rohrabschnitt zur Herstellung des Kopplungselements kann bevorzugt von einem hohlkreiszylindrischen Rohr ohne Vorverformungen abgelängt sein, wobei die Länge in Achsrichtung im Wesentlichen der Länge des Aufnahmeabschnitts zuzüglich der Länge des Koppelabschnitts entsprechen kann. Es ist alternativ denkbar und möglich, dass das Rohr eine andere Querschnittsform hat, beispielsweise vier-, sechs- oder mehreckig, oder oval, dabei gleichseitig oder ungleichseitig.

Zur Anbindung an ein mit der Gewindespindel zu koppelndes Bauteil kann in dem flach gequetschten Pressabschnitt ein Verbindungsmittel ausgebildet werden, beispielsweise eine quer zur Achse und zur Pressebene durchgehende Verbindungsöffnung, die beispielsweise als Bohrung ausgebildet sein kann und als Gelenköffnung dienen kann. Die Bohrung kann sowohl durch eine spanende oder durch eine trennende Operation, wie Stanzen, eingebracht werden. Alternativ oder zusätzlich können - durch spanende oder bevorzugt nichtspanende Bearbeitung - Formschlusselemente in den Pressabschnitt eingebracht werden, wie beispielsweise Vorsprünge, Vertiefungen, Ab- und Umkantungen, Sicken oder dergleichen.

Zur Festlegung in Achsrichtung und in Umfangsrichtung auf der Gewindespindel kann der Innendurchmesser des Rohrabschnitts gleich groß oder geringfügig kleiner sein als der Außendurchmesser der Gewindespindel, beispielsweise der Gewindeaußendurchmesser im Endbereich der Gewindespindel, der mit dem Kopplungselement verbunden werden soll. Durch axiales Einpressen der Gewindespindel in die Aufnahmeöffnung des Aufnahmeabschnitts kann eine kraftschlüssige Verbindung erzeugt werden. Alternativ kann das Kopplungselement durch eine Schraubbewegung auf die Gewindespindel gefügt werden, mit anderen Worten kann durch eine Dreh- und Axialbewegung in Achsrichtung die Fügeoperation durchgeführt werden. Alternativ oder zusätzlich kann eine formschlüssige Fixierung erfolgen, beispielsweise durch plastische Verformung des Aufnahmeabschnitts auf der Gewindespindel, wodurch ineinander bevorzugt unlösbar eingreifende Formschluss-Strukturen erzeugt werden können. Derartige Formschluss-Strukturen können beispielsweise durch eine oder mehrere, von außen in den Rohrabschnitt lokal eingeformte Einpressungen erzeugt werden, die sich über einen Teilbereich des Rohrumfangs erstrecken. Diese Operation kann auch als eine Verstemmung oder als Crimpen bzw. Vercrimpen bezeichnet werden. Dadurch kann die auf seiner von außen gegen die Gewindespindel gerichteten Innenseite der Rohrabschnitt plastisch in die Gewindespindel eingeformt werden, beispielsweise auch in die Gewindegänge des Spindelgewindes, so dass eine formschlüssige Verzahnung zwischen dem Koppelabschnitt und der Gewindespindel erzeugt wird. Eine Einpressung kann sich über einen Teilabschnitt in Längsrichtung, in Achsrichtung erstrecken, zur Erzeugung eines in Achsrichtung wirksamen Formschlusses, und / oder über einen Teilumfang, zur Erzeugung eines in Umfangsrichtung wirksamen Formschlusses einer drehschlüssigen Verbindung.

Bevorzugt weist der Pressabschnitt in einer Kontaktfläche gegeneinander anliegende Rohrwandungsabschnitte auf. Durch das Verquetschen wird das Rohr parallel zu der Kontaktfläche flach verformt, bis die innen beiderseits der Achse einander gegenüberliegenden Innenabschnitte in der Kontaktfläche zusammentreffen und zusammen einen in seiner Grundform ebenen Koppelabschnitt bilden, beispielsweise in Form einer flachen Lasche. Somit kommt es durch das Verquetschen dazu, dass die Innenmantelfläche des Rohrabschnitts mit sich selbst partiell in Kontakt kommt, so dass die Kontaktflächen einen Abschnitt der Innenmantelfläche des Rohrabschnitts darstellen.

Die Achse kann in der Kontaktfläche liegen. Dadurch wird eine symmetrische, koaxiale Anordnung gebildet, bei der die Achse zentral durch den Koppelabschnitt verläuft, und damit zwischen den durch das Verquetschen gegeneinander anliegenden Rohrwandungsabschnitten.

Alternativ zur vorgenannten Ausführung ist es denkbar und möglich, dass die Kontaktfläche Abstand zur Achse hat, wodurch eine asymmetrische Anordnung gebildet wird.

Vorzugsweise weist der Pressabschnitt zwei zur Achse parallele Außenflächen auf. Dadurch wird ein flacher Koppelabschnitt gebildet, der sich als Flachprofil in Achsrichtung von dem Aufnahmeabschnitt weg gerichtet erstreckt. Die Außenflächen der durch das Verquetschen gegeneinander flach verformten Rohrwandungsabschnitte sind im Wesentlichen eben und liegen einander bezüglich der Achsrichtung gegenüberliegend.

Es ist möglich, dass die Achse in einer der Außenflächen liegt. Dadurch kann eine asymmetrische Anordnung realisiert sein, bei der sich der Koppelabschnitt versetzt mit radialem Abstand zur Achse erstreckt. Dadurch verläuft die Achse außerhalb der vorgenannten Kontaktfläche, in der die verformten Rohrwandungsabschnitte gegeneinander anliegen.

Es kann vorgesehen sein, dass eine der Außenflächen sich tangential zum Aufnahmeabschnitt erstreckt. Dadurch kann die Krafteinleitung in die Gewindespindel optimiert werden, und Bauraum für Befestigungsmittel im Querschnitt des Aufnahmeabschnitts geschaffen werden.

Bevorzugt hat der Pressabschnitt in einer Richtung quer zur Achse gemessen eine Dicke, die kleiner ist als ein Durchmesser des Aufnahmeabschnitts, bevorzugt kleiner als der Außendurchmesser des Aufnahmeabschnitts, wobei dieser Außendurchmesser bevorzugt dem Außendurchmesser des Rohrabschnitts vor dem Verquetschen des als Pressabschnitt ausgebildeten Koppelabschnitts entspricht. Die Dicke entspricht dem Abstand zwischen den Außenflächen des Koppelabschnitts in der Pressrichtung des Verquetschens. Bevorzugt ist die Dicke des Koppelabschnitts kleiner oder gleich der zweifachen Wandungsdicke der Wandung des Rohrabschnitts. Alternativ kann es auch vorgesehen sein, dass der Koppelabschnitt eine Dicke aufweist, die maximal 10% grösser ist als die zweifache Wandungsdicke.

Der Pressabschnitt kann in einer Richtung eine Breite haben, die größer ist als ein Durchmesser des Aufnahmeabschnitts, bevorzugt größer als der Außendurchmesser des Aufnahmeabschnitts, wobei dieser Außendurchmesser bevorzugt dem Außendurchmesser des Rohrabschnitts vor dem Verquetschen des als Pressabschnitt ausgebildeten Koppelabschnitts entspricht. Die Breite erstreckt sich dabei quer zur Achse und quer zur Dicke. Durch einfaches flaches Verquetschen wird eine Breite erzeugt, welche maximal dem halben mittleren Umfang der Rohrwandung des Rohrabschnitts entspricht.

Das Verbindungsmittel kann eine quer zur Achse durch den Pressabschnitt durchgehende Verbindungsöffnung umfassen. Dadurch erhält der Koppelabschnitt die Form einer flachen Gelenklasche, wobei die Verbindungsöffnung eine Gelenköffnung zur Aufnahme eines Gelenkbolzens darstellt, zur gelenkigen, um den Gelenkbolzen schwenkbaren Anbindung der Gewindespindel an eine Lenksäule. Der Gelenkbolzen kann dabei bevorzugt als Schraube oder Niet realisiert sein.

Bevorzugt weist der Rohrabschnitt vor dem Verquetschen eine über den Umfang und über die Länge gleiche Wanddicke auf.

Ein Verfahren zur Herstellung eines Kopplungselements, das einen Aufnahmeabschnitt aufweist, der einstückig mit einem Koppelabschnitt ausgebildet ist, wobei der Aufnahmeabschnitt sich hohlzylindrisch längs einer Achse erstreckt mit einer axialen Aufnahmeöffnung zur Aufnahme der Gewindespindel, und der Koppelabschnitt quer zur Achse relativ zum Aufnahmeabschnitt abgeflacht ist und ein Verbindungsmittel aufweist,
umfasst erfindungsgemäß die Schritte:
- Bereitstellen eines Rohrabschnitts,
- Plastisches Verformen eines Endbereichs des Rohrabschnitts quer zu seiner Achse durch Zusammenpressen zwischen gegeneinander bewegten, flächenhaft erstreckten Presswerkzeugen, zur Ausbildung eines flachen Pressabschnitts,
- Einbringen eines Verbindungsmittels in den Pressabschnitt .

Der Rohrabschnitt kann bereitgestellt werden durch Ablängen von Standard-Rohr- bzw. Hohlmaterial, in einer Länge, die in etwa der Summe der Längen von Aufnahme- und Koppelabschnitt entspricht. Bevorzugt ist Länge des Rohrabschnitts vor dem Verquetschen grösser als die Summe der Längen des Aufnahmeabschnitts und des Koppelabschnitts. Das hohlzylindrische Rohrmaterial, bevorzugt ein hohlkreiszylindrisches Rohrmaterial, kann einen kreisrunden, oder einen vier-, sechs- oder mehreckigen, oder ovalen, dabei gleichseitigen oder ungleichseitigen Querschnitt haben. Der eine Endbereich wird - bevorzugt durch Kaltverformung - zwischen zwei Presswerkzeugen, beispielsweise ebenen Pressbacken, flach gequetscht, bevorzugt bis sich die Innenwandungen des Rohrabschnitts zumindest abschnittweise kontaktieren, bevorzugt in einer Kontaktebene. Dadurch wird der oben beschriebene, flache Pressabschnitt ausgebildet. Zur Erzeugung des Koppelabschnitts wird ein Verbindungsmittel eingebracht, beispielsweise durch Stanzen oder Bohren eine quer zur Achse durchgehende Verbindungs- oder Gelenköffnung. Dadurch kann eine Gelenklasche oder dergleichen zur Anbindung an eine Lenksäule gebildet werden.

Unter "zwischen gegeneinander bewegten, flächenhaft erstreckten Presswerkzeugen" ist zu verstehen, dass die Presswerkzeuge sich relativ zueinander bewegen.

Der andere Endbereich des Rohrabschnitts kann zunächst unverformt bleiben. Die Öffnung des offenen Rohrende erstreckt sich bis zum Pressabschnitt, bildet also eine topfförmige Sacköffnung.

Die Länge des Aufnahmeabschnitts, der nicht flachgequetschte Abschnitt des Rohrabschnitts, wird bevorzugt gewählt, um eine Befestigung auf einem Ende einer Gewindespindel zu ermöglichen. Bevorzugt ist die Länge des Aufnahmeabschnitts mindestens gleich dem Außendurchmesser des Rohrabschnitts, oder größer als der Außendurchmesser des Rohrabschnitts.

Die Länge des Pressabschnitts, und des daraus gebildeten Koppelabschnitts, kann an die Verbindungsmittel angepasst sein. Bevorzugt ist auch dabei eine Länge mindestens gleich dem Außendurchmesser des Rohrabschnitts, oder größer als der Außendurchmesser des Rohrabschnitts.

Die Presswerkzeuge umfassen bevorzugt ein Unterpresswerkzeug und ein Oberpresswerkzeug, wobei sich bevorzugt das Oberpresswerkzeug auf das als Widerlager ausgebildete Unterpresswerkzeug zubewegt, wobei das Unterpresswerkzeug unbeweglich ist. Eine Anordnung vice versa ist ebenfalls denkbar und möglich. Zusätzlich können Seitenschieber zum Einsatz kommen, die die Breite des Pressabschnitts beim Verquetschen in eine vorgegeben Form bringen. Alternativ kann es auch vorgesehen sein, dass der Pressabschnitt sich beim Verquetschen frei entfalten kann.

Alternativ können die Presswerkzeuge durch eine Walze und ein Gegenlager gebildet sein, wobei diese einen Abstand zueinander aufweisen, der der Dicke des herzustellenden Pressabschnitts entspricht, wobei der Rohrabschnitt zwischen der Walze und dem Gegenlager eingeführt wird zum plastischen Verformen eines Endbereichs des Rohrabschnitts quer zu seiner Achse durch Zusammenpressen zur Ausbildung eines flachen Pressabschnitts. Die Rotationsachse der Walze ist bevorzugt orthogonal oder parallel zur Achse des Rohrabschnitts angeordnet.

Das Gegenlager kann in einer besonderen Weiterbildung ebenfalls als Walze ausgebildet sein.

Alternativ wird ein Verfahren zur Herstellung eines Kopplungselements, das einen Aufnahmeabschnitt aufweist, der einstückig mit einem Koppelabschnitt ausgebildet ist, wobei der Aufnahmeabschnitt sich hohlzylindrisch längs einer Achse erstreckt mit einer axialen Aufnahmeöffnung zur Aufnahme der Gewindespindel, und der Koppelabschnitt quer zur Achse relativ zum Aufnahmeabschnitt abgeflacht ist und ein Verbindungsmittel aufweist,
umfasst erfindungsgemäß die Schritte:
- Bereitstellen eines Rohrabschnitts,
- Plastisches Verformen eines Mittelbereichs des Rohrabschnitts quer zu seiner Achse durch Zusammenpressen zwischen gegeneinander bewegten, flächenhaft erstreckten Presswerkzeugen, zur Ausbildung eines flachen Pressabschnitts,
- Einbringen eines ersten Verbindungsmittels und eines zweiten Verbindungsmittels in den Pressabschnitt,
- Zertrennen zwischen den Verbindungsmitteln im Bereich des flachen Pressabschnitts zum Erhalten zweier Kopplungselemente.

Somit kann auf einfache und kostengüstige Art und Weise zwei Kopplungselemente gleichzeitig hergestellt werden. Bevorzugt ist das Zertrennen ein Halbieren des Zwischenprodukts, wobei das Zertrennen bevorzugt entlang einer Schnittachse erfolgt, die orthogonal zur Achse ist.

Der Rohrabschnitt kann bereitgestellt werden durch Ablängen von Standard-Rohr- bzw. Hohlmaterial, in einer Länge, die in etwa der doppelten Summe der Längen von einem Aufnahme- und Koppelabschnitt entspricht. Bevorzugt ist Länge des Rohrabschnitts vor dem verquetschen grösser als die doppelte Summe der Längen eines Aufnahmeabschnitts und eines Koppelabschnitts.

Alle oben beschriebenen Abwandlungsmöglichkeiten lassen sich ohne weiteres auf dieses Verfahren übertragen.

Bei einer Gewindespindel für einen Spindeltrieb, insbesondere einen als Tauchspindelantrieb ausgebildeten Verstellantrieb insbesondere zur Verstellung einer Lenksäule, die ein Außengewinde aufweist, und auf der ein vorangehend beschriebenes Kopplungselement mit einem Aufnahmeabschnitt befestigt ist, der einstückig mit einem Koppelabschnitt ausgebildet ist, wobei der Aufnahmeabschnitt sich hohlzylindrisch längs einer Achse erstreckt mit einer axialen Aufnahmeöffnung, in der ein Befestigungsabschnitt der Gewindespindel koaxial aufgenommen ist, und der Koppelabschnitt quer zur Achse relativ zum Aufnahmeabschnitt abgeflacht ist und ein Verbindungsmittel aufweist, ist erfindungsgemäß vorgesehen, dass der Aufnahmeabschnitt und der Koppelabschnitt aus einem durchgehenden, einstückigen Rohrabschnitt ausgebildet sind, wobei der Koppelabschnitt einen Pressabschnitt aufweist, in dem der Rohrabschnitt quer zur Achse plastisch flach verquetscht ist.

Der Befestigungsabschnitt der Gewindespindel kann durch einen Endabschnitt der Gewindespindel gebildet sein, wobei der Befestigungsabschnitt der Gewindespindel auch das Außengewinde aufweist.

Eine erfindungsgemäße Gewindespindel weist ein Kopplungselement auf, welches in der beschriebenen Weise auf einem Rohrabschnitt gefertigt und mit der Gewindespindel verbunden ist. Dadurch kann die Fertigung der Gewindespindel einfacher und kostengünstiger erfolgen, und eine Anpassung an unterschiedliche Bauformen von Lenksäulen ist mit geringerem Aufwand möglich.

Zur Verbindung mit der Gewindespindel kann das Kopplungselement in dem Aufnahmeabschnitt mindestens eine partielle plastische Deformation aufweisen. Die plastische Deformation kann bevorzugt fest mit dem Außengewinde der Gewindespindel verbunden sein.

Die mindestens eine partielle Deformation bildet einen Befestigungsbereich, der durch eine plastische Umformung eines Teilbereichs des Aufnahmeabschnitts erzeugt wird. Ein Teilbereich kann ein Umfangsteilbereich, bezogen auf den Umfang der Gewindespindel, sein und/oder ein sich in Achsrichtung erstreckender Längenteilbereich, bezogen auf die axiale Länge des Aufnahmeabschnitts, in der dieser einen Abschnitt der Gewindespindel, bevorzugt einen Gewindeabschnitt des Außengewindes der Gewindespindel umgibt. Beispielsweise kann in einem Umfangs- und/oder Längenabschnitt des Aufnahmeabschnitts eine Umformoperation ausgeführt werden, durch die das Material des Aufnahmeabschnitts - beispielsweise ein metallischer Werkstoff wie Stahl oder ein Nichteisenmetall - lokal fließt und eine dauerhafte Formänderung erzeugt wird. Bevorzugt kann die Formänderung durch einen Kaltumformprozess erzeugt werden, wie beispielsweise Pressen, Walzen, Prägen, Rollieren, Hämmern oder dergleichen. Im Ergebnis erzeugt die Formänderung eine, bevorzugt mehrere lokale Deformationen, welche separate funktionale Bereiche bzw. Abschnitte an oder in dem Aufnahmeabschnitt definieren, in denen jeweils lokal eine feste Fügeverbindung mit der Gewindespindel erzeugt wird.

Durch die lokale Umformung wird gewissermaßen durch die Deformationen jeweils eine Art integriertes Verbindungs- oder Befestigungselement an oder in dem Aufnahmeabschnitt ausgebildet. Mit einer relativ geringeren Fügekraft kann eine gute Haltewirkung des Aufnahmeabschnitts auf der Gewindespindel erreicht werden.

In einer bevorzugten Ausführungsform kann ein aus Kunststoff gebildetes Kopplungselement mittels Heißverstemmen oder Heißpressen eingebrachten partiellen Deformationen auf der Gewindespindel fixiert werden. Alternativ kann dies auch mittels Ultraschallerwärmen mit einer Sonotrode erfolgen. Mittels dieser thermischen Fügeverfahren kann das aus Kunststoff gebildete Kopplungselement stoffschlüssig auf der Gewindespindel fixiert werden, beispielsweise mittels Ultraschall- oder Reibschweißen. Dabei kann es vorgesehen sein,dass der Kunststoff zumindest in die Gewindegänge der Gewindespindel teilweise hineinfließt und sich somit an die Außenkontur der Gewindespindel anschmiegt.

Es können eine oder mehrere partielle Deformationen in den Aufnahmeabschnitt eingebracht werden, beispielsweise mittels Kaltumformverfahren, wenn sich der Aufnahmeabschnitt auf der Gewindespindel angeordnet ist.

Eine plastische Deformation kann gegen das Außengewinde gerichtet sein, so dass sie in Fügekontakt mit dem Außengewinde kommt. Bei der plastischen Umformung, beispielsweise durch ein Kaltumformverfahren, fließt das Material des Aufnahmeabschnitts von außen gegen die Gewindespindel in einem Außengewinde-Teilabschnitt, welcher dem durch die Deformation umgeformten Teilbereich des Aufnahmeabschnitts gegenüberliegt. Beispielsweise kann der Aufnahmeabschnitt bezüglich der Spindelachse in radialer Richtung umgeformt werden, beispielsweise durch eine von außen in den Aufnahmeabschnitt eingebrachte Einformung, welche eine nach innen ausgeformte Deformation erzeugt, die dabei mit zumindest einer radialen Komponente in Fügekontakt mit dem Außengewinde gebracht wird.

Eine Deformation kann bevorzugt mit einer plastischen Verformung des Außengewindes formschlüssig verbunden sein, die gebildet wird durch einen dauerhaft verformten Bereich des Außengewindes, der von der ursprünglichen Gewindeform abweicht, beispielsweise eine in Umfangsrichtung und/oder Längenrichtung begrenzte lokale Vertiefung im Gewindeprofil. Dadurch, dass die Deformation des Aufnahmeabschnitts in die Verformung des Außengewindes eingreift, wird ein Formschlusseingriff erzeugt, der sich über einen Umfangs- und/oder Längenteilbereich erstrecken kann, und dadurch den Aufnahmeabschnitt bezüglich Drehung um die Spindelachse und/oder axial bezüglich Bewegung in Richtung der Spindelachse formschlüssig fest mit der Gewindespindel verriegelt. Anders ausgedrückt bilden eine Deformation des Aufnahmeabschnitts und eine korrespondierende Verformung des Außengewindes jeweils eine unlösbare Formschlussverbindung.

Die hohe Haltewirkung ermöglicht eine sichere Krafteinleitung in die Gewindespindel, beispielsweise auch bei einem Fahrzeugcrash, wenn durch besonders hohe Kraftspitzen auftreten, die auch auf die Verstellantriebe der Lenksäule einwirken. Dadurch wird eine Erhöhung des Sicherheitsniveaus bewirkt.

Vorzugsweise werden die Deformation des Aufnahmeabschnitts und die korrespondierende Verformung des Außengewindes der Gewindespindel durch Kaltumformung erzeugt. Dies kann dadurch erreicht werden, dass bei der Erzeugung der Deformation derart hohe Umformkräfte eingeleitet werden, dass die Deformation in die Gewindespindel eingepresst und dabei plastisch eingeformt wird, so dass ein negativer Abdruck der Deformation in dem Außengewinde erzeugt wird. Vorteilhaft daran ist, dass die Deformation und die Verformung in einem praktisch spielfreien, kombinierten Form- und Kraftschluss miteinander verbunden werden. Dadurch wird eine hohe Haltekraft erreicht, wobei unerwünschte Geräuschbildung durch Relativbewegung im Spiel wirksam vermieden werden kann.

Eine vorteilhafte Ausführung der Erfindung sieht vor, dass der rohrförmige Aufnahmeabschnitt eine Öffnung mit einem Innendurchmesser aufweist, der größer oder gleich dem Außendurchmesser des Außengewindes ist, wobei die Deformation in einem Teilbereich über den Innendurchmesser nach innen in die Durchgangsöffnung vorsteht. Vor der Montage auf der Gewindespindel, also im nicht auf der Gewindespindel befestigten Zustand, hat der Aufnahmeabschnitt eine freie Öffnung, welche in axialer Richtung auf die Gewindespindel aufgeschoben werden kann. Dabei erstreckt sich die Gewindespindel nur im Bereich des aufnahmeabschnitts, und nicht in dem Bereich des Pressabschnitts. Dadurch, dass der freie Durchgangsquerschnitt größer als der äußere Gewinde-Nenndurchmessser ist, kann der Aufnahmeabschnitt vor der Erzeugung der Fügeverbindung auf dem Außengewinde positioniert werden, ohne dass plastische Verformung, Spanbildung oder Abrieb auftritt. Dadurch wird die genaue Positionierung erleichtert, und es treten keine potentiell schädlichen Verunreinigungen durch Späne oder abgeriebene Partikel auf.

Eine Deformation kann jeweils durch eine von außen in den Aufnahmeabschnitt eingebrachte Um- oder Einformung gebildet werden. In den zunächst unverformten Aufnahmeabschnitt können zur Erzeugung der Fügeverbindung eine oder mehrere Deformationen durch Einpressen oder Einprägen eines in radialer Richtung bewegten Presswerkzeugs in die äußere Mantelfläche erfolgen, oder mittels einer Rollierwalze, die beim Abrollen in Achs- oder Umfangsrichtung oder schräg dazu eine Vertiefung von außen in die Hülse einwalzt. Dadurch wird die Hülse auf ihrer gegen das Außengewinde anliegenden Innenfläche radial nach innen lokal ausgeformt und gegen das Gewinde angepresst oder unter plastischer Verformung formschlüssig in dieses eingepresst.

Eine Deformation kann sich über einen Umfangsteilabschnitt und/oder einen Längenteilabschnitt des Aufnahmeabschnitts erstrecken. Beispielsweise kann ein Umfangsteilbereich durch Einpressen oder Rollieren einer in Achsrichtung verlaufenden Vertiefung zur Bildung einer Deformation umgeformt sein, oder ein Längenteilbereich mit einer in Umfangsrichtung umlaufenden Einformung. Es ist ebenfalls möglich, einen in Umfangs- und Achsrichtung begrenzten Teilbereich zur Ausbildung einer Deformation umzuformen, beispielsweise durch radiales Einpressen eines Presswerkzeugs.

Eine Mehrzahl von Deformationen kann über den Aufnahmeabschnitt verteilt angeordnet sein. Beispielsweise können zwei, drei oder mehr Vertiefungen in Umfangsrichtung verteilt von außen in den Aufnahmeabschnitt plastisch eingeformt werden, oder mit axialen Abstand zueinander in Achsrichtung aufeinander folgend.

Bei einem Spindeltrieb, insbesondere für einen Verstellantrieb zur Verstellung einer Lenksäule, umfassend eine drehend antreibbare Spindelmutter, in die eine Gewindespindel der vorangehend beschriebenen Art eingreift, die ein Außengewinde aufweist, und auf der ein Kopplungselement mit einem Aufnahmeabschnitt befestigt ist, der einstückig mit einem Koppelabschnitt ausgebildet ist, wobei der Aufnahmeabschnitt sich hohlzylindrisch längs einer Achse erstreckt mit einer axialen Aufnahmeöffnung, in der ein Befestigungsabschnitt der Gewindespindel koaxial aufgenommen ist, und der Koppelabschnitt quer zur Achse relativ zum Aufnahmeabschnitt abgeflacht ist und ein Verbindungsmittel aufweist, ist erfindungsgemäß vorgesehen, dass der Aufnahmeabschnitt und der Koppelabschnitt aus einem durchgehenden, einstückigen Rohrabschnitt ausgebildet sind, wobei der Koppelabschnitt einen Pressabschnitt aufweist, in dem der Rohrabschnitt quer zur Achse plastisch flach verquetscht ist.

Dank der mit einem erfindungsgemäßen Koppelements ausgestalteten Gewindespindel kann ein Spindeltrieb mit geringem Aufwand bereitgestellt und flexibel an unterschiedliche Anforderungen angepasst werden.

Dadurch, dass sich die Gewindespindel nur im Bereich des Aufnahmeabschnitts erstreckt, und nicht im Pressabschnitt, kann vorteilhaft eine geringere Masse des Kopplungselements realisiert werden.

Bei einer Lenksäule für ein Kraftfahrzeug, mit einer Trageinheit, die an einer Fahrzeugkarosserie anbringbar ist, und von der eine Stelleinheit gehalten ist, in der eine Lenkspindel drehbar gelagert ist, und mit einem Verstellantrieb, der zwischen der Trageinheit und der Stelleinheit angeordnet ist, und von dem die Stelleinheit relativ zur Trageinheit verstellbar ist, wobei der Verstellantrieb als Spindeltrieb ausgebildet ist, umfassend eine drehend antreibbare Spindelmutter, in die eine Gewindespindel eingreift, die ein Außengewinde aufweist, und auf der ein Kopplungselement mit einem Aufnahmeabschnitt befestigt ist, der einstückig mit einem Koppelabschnitt ausgebildet ist, wobei der Aufnahmeabschnitt sich hohlzylindrisch längs einer Achse erstreckt mit einer axialen Aufnahmeöffnung, in der ein Befestigungsabschnitt der Gewindespindel koaxial aufgenommen ist, und der Koppelabschnitt quer zur Achse relativ zum Aufnahmeabschnitt abgeflacht ist und ein Verbindungsmittel aufweist, ist erfindungsgemäß vorgesehen, dass der Aufnahmeabschnitt und der Koppelabschnitt aus einem durchgehenden, einstückigen Rohrabschnitt ausgebildet sind, wobei der Koppelabschnitt einen Pressabschnitt aufweist, in dem der Rohrabschnitt quer zur Achse plastisch flach verquetscht ist.

Dadurch kann der Herstellungsaufwand verringert werden.

In einer vorteilhaften Weiterbildung kann es vorgesehen sein, dass das Kopplungselement in einem Crashfall, wenn das Fahrzeug beispielsweise einen Frontalaufprall hat, von der Gewindespindel getrennt wird. Dabei kann zumindest ein Teil der eingetragenen Energie absorbiert wird, in dem diese in Verformungsarbeit umgewandelt wird. Mit anderen Worten wird das Kopplungselement und die Gewindespindel im Crashfall auseinander gerissen, wobei sowohl das Kopplungselement als auch die Gewindespindel zumindest teilweise plastisch deformiert werden.

Alternativ kann bei einem Kopplungselement zur Anbringung an einer Gewindespindel, das einen Aufnahmeabschnitt aufweist, der einstückig, bevorzugt integral einstückig, mit einem Koppelabschnitt ausgebildet ist, wobei der Aufnahmeabschnitt sich hohlzylindrisch längs einer Achse erstreckt mit einer axialen Aufnahmeöffnung zur Aufnahme der Gewindespindel, und der Koppelabschnitt quer zur Achse relativ zum Aufnahmeabschnitt abgeflacht ist und ein Verbindungsmittel aufweist, erfindungsgemäß vorgesehen sein, dass der Aufnahmeabschnitt und der Koppelabschnitt aus einem durchgehenden, einstückigen Blechabschnitt ausgebildet sind, wobei der Aufnahmeabschnitt einen Rohrabschnitt aufweist, in dem der Blechabschnitt um die Achse rohrförmig umgebogen ist.

Bei der alternativen Ausführungsform, wird nicht wie in der ersten Ausführung der Erfindung von einem rohrförmigen Halbzeug ausgegangen, sondern von Flachmaterial in Form eines Blechabschnitts. Der Blechabschnitt kann aus metallischen oder nichtmetallischen Werkstoffen bestehen, beispielsweise auch Kunststoffmaterial. Mit dem Begriff "Flachmaterial" ist allgemein gemeint, dass von dem Blechabschnitt vor dem Umbiegen kein Raumbereich vollständig umschlossen wird.

Der Koppelabschnitt kann durch einen ebenen Abschnitt des Blechabschnitts gebildet werden. Dieser kann wie oben für die erste Ausführung beschrieben eine Verbindungsöffnung in Form einer Bohrung oder Stanzung aufweisen.

Zur Bildung des Aufnahmeabschnitts des Aufnahmeabschnitts kann der Blechabschnitt zunächst zu einem Rohrabschnitt umgeformt werden. Dieser kann bevorzugt in Form einer offenen Rinne umgebogen sein, die zwei Befestigungsfahnen aufweist. Die Befestigungsfahnen erstrecken sich entlang der Rinne und stehen von den Rändern der Rinne quer zur Längserstreckung ab, so dass zwischen den beiden Befestigungsfahnen ein freier Zugang zur Rinne freibleibt.

Zur Befestigung wird die Gewindespindel quer zur Spindelachse zwischen den Befestigungsfahnen hindurch in die vorgeformte Rinne eingelegt, so dass die Spindelachse in Längsrichtung in der Rinne verläuft. Anschließend können die Befestigungsfahnen um den Außenumfang des Außengewindes der Gewindespindel rohrförmig umgebogen werden.

Die Fertigung des Koppelabschnitts kann durch Stanz- und Pressoperationen aus Blech rationell und kostengünstig erfolgen.

Die Fixierung kann durch Crimpen bzw. Vercrimpen erfolgen. Bei diesem Befestigungsverfahren werden die Befestigungsfahnen nach dem Umbiegen von außen gegen die die Gewindespindel, bevorzugt gegen das Außengewinde der Gewindespindel angepresst, so dass das Blechmaterial unter plastischer Verformung, bevorzug ebenfalls unter gleichzeitiger plastischer Verformung des Außengewindes - mit der Gewindespindel verbunden wird, und eine Formschlussverbindung ausgebildet wird. Mit anderen Worten ist der Aufnahmeabschnitt auf das Außengewinde gecrimpt. Durch das im Blech und im Gewinde beim Crimpen auftretende Fließen des Materials kann eine dauerhafte, unlösbare und sichere Verbindung mit relativ geringem Aufwand erzeugt werden. Zur weiteren Verbesserung der Verbindung kann es vorgesehen sein, dass die Befestigungsfahnen nach der Umformoperation mittels einer Schweißoperation, besonders bevorzugt einer Laserschweißoperation, miteinander verbunden werden.

Es ist weiterhin denkbar und möglich, dass ein Funktionselement einer Energieabsorptionseinrichtung einstückig mit einem Kopplungselement ausgebildet ist, welches aus einem einstückigen Rohrabschnitt oder einem einstückigen Blechabschnitt ausgebildet ist. Ein Funktionselement kann beispielsweise ein Verformungselement sein, welches bei einer Relativbewegung eines Verstellantriebs relativ zur Lenksäule in Crashfall unter Energieabsorption kinetischer Aufprallenergie entweder selbst plastisch verformt wird, oder eine energieabsorbierende Verformung eines anderen Elements bewirkt. Beispielsweise kann ein Aufweitungselement in Form eines Dorns, Keils oder dergleichen an den Pressabschnitt oder den Koppelsabschnitt angeformt sein. Das Aufweitungselement kann im Crashfall beispielsweise über einen Crashweg entlang der Längsachse der Lenksäule durch einem Schlitz, der relativ zum Aufweitungelement Untermaß hat, gezwängt werden, und der dabei unter Energieabsorption plastisch aufgeweitet wird. Auch andere an sich bekannte Formen von Energieabsorptionselementen, beispielsweise Reiß- oder Biegelaschen, oder kombinierte Reiß-Biege-Elemente, können einstückig mit dem Rohrabschnitt oder dem einstückigen Blechabschnitt ausgebildet sein. Es kann auch vorgesehen sein, dass das Funktionselement als Widerlager in einem Crashelement, wie einen Biegedraht, eingreift, wobei sich dieses Crashelement im Crashfall an dem Funktionselment abstützt.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Darstellung einer Lenksäule mit einer motorischen Verstellung,
- Figur 2: einen Verstellantrieb der Lenksäule gemäß Figur 1 in auseinander gezogener Darstellung,
- Figur 3: einen Längsschnitt durch eine erfindungsgemäße Gewindespindel,
- Figur 4: ein erfindungsgemäßes Koppelelement in perspektivischer Darstellung,
- Figur 5: das Koppelelement gemäß Figur 4 in einer Seitenansicht in montiertem Zustand an einer Lenksäule gemäß Figur 1,
- Figur 6: einen Längsschnitt durch das Koppelelement gemäß Figur 4,
- Figur 7: einen Längsschnitt durch eine zweite Ausführung eines Koppelelements in einer Ansicht wie in Figur 4,
- Figur 8: einen Längsschnitt durch eine dritte Ausführung eines Koppelelements in einer Ansicht wie in Figur 4,
- Figur 9: eine vergrößerte Detaildarstellung der Schnittansicht gemäß Figur 3,
- Figur 10: eine erfindungsgemäße Gewindespindel mit einem Koppelelement in einer zweiten Ausführungsform,
- Figur 11: ein Kopplungselement in der zweiten Ausführungsform vor der Montage,
- Figur 12: eine dritte Ausführungsform eines Koppelelements.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

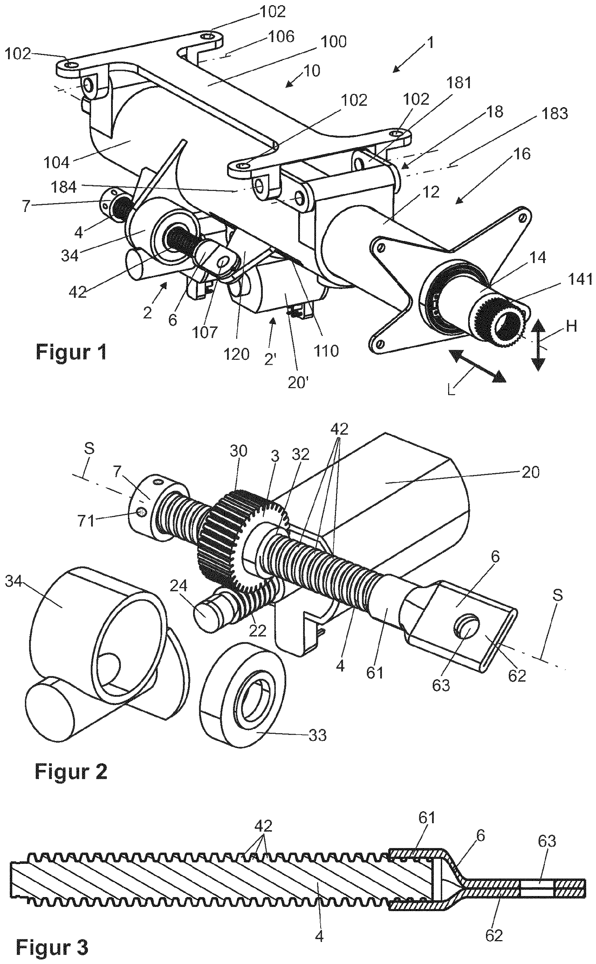

Figur 1 zeigt eine Lenksäule 1, welche eine mit dem Chassis eines hier nicht gezeigten Kraftfahrzeugs verbindbare Trageinheit 10 aufweist, an welcher eine Stelleinheit 16 verstellbar gehalten ist, und zwar in Längsrichtung L und in Höhenrichtung H, wie mit den Doppelpfeilen angedeutet ist. Die Trageinheit 10 umfasst eine Konsole 100, welche am Chassis des Kraftfahrzeugs, beispielsweise über Befestigungsbohrungen 102, befestigt werden kann.

Die Stelleinheit 16 umfasst ein Mantelrohr 12, in welchem eine Lenkspindel 14 drehbar gelagert ist. Am lenkradseitigen Ende 141 der Lenkspindel 14 kann ein hier nicht gezeigtes Lenkrad befestigt werden. Die Lenkspindel 14 dient dazu, ein von einem Fahrer über das Lenkrad auf die Lenkspindel 14 eingebrachtes Lenkmoment in bekannter Weise auf ein hier nicht gezeigtes lenkbares Rad zu übertragen. Die Lenkspindel 14 kann dabei die Lenkbewegung von dem Lenkrad auf das lenkbare Rad unter Zwischenschaltung eines Lenkgetriebes, gegebenenfalls unter Zuhilfenahme einer Hilfskraftunterstützung, übertragen.

In einer Variante kann die Lenkbewegung von der Lenkspindel 14 auch sensorisch, beispielsweise elektrisch, elektronisch oder magnetisch, abgetastet werden und in eine Steuerung eingespeist werden, welche unter Zuhilfenahme einer Lenkeinrichtung eine Verschwenkung des lenkbaren Rades zur Darstellung der Lenkbewegung ausführt. Derartige Systeme sind als Steer-by-wire-Lenksysteme bekannt.

Das Mantelrohr 12 ist in einer Manteleinheit 104 in Längsrichtung L, das ist die Längsverstellrichtung, verschiebbar gehalten, wobei sich die Längsrichtung L in Achsrichtung der Lenkspindel 14 erstreckt. Durch eine Verstellung des Mantelrohrs 12 gegenüber der Manteleinheit 104 kann entsprechend eine Längsverstellung der Lenkspindel 14 und damit des nicht dargestellten Lenkrades zur Anpassung der Position des Lenkrades an die Sitzposition eines Fahrers des Kraftfahrzeugs erreicht werden.

Die Manteleinheit 104 ist verschwenkbar an einer Konsole 100 befestigt und kann um eine Schwenkachse 106 gegenüber der Konsole 100 verschwenkt werden. Eine Verstellbarkeit der Stelleinheit 16 in einer Höhenrichtung H, das ist die Höhenverstellrichtung, die im Wesentlichen senkrecht zur Längsrichtung L orientiert ist, wird darüber ermöglicht, dass das Mantelrohr 12 über einen Verschwenkmechanismus 18 an der Konsole 100 gehalten ist. Damit ergibt sich eine Verschwenkbarkeit des Mantelrohrs 12 und der Lenkspindel 14 gegenüber der Trageinheit 10 und insbesondere gegenüber der Konsole 100 um die Schwenkachse 106 derart, dass auch eine Höhenverstellung des hier nicht gezeigten und an der Lenkspindel 14 angeordneten Lenkrades erreicht wird, um auch auf diese Weise eine Anpassung der Position des Lenkrades an die Sitzposition des Fahrers zu erreichen.

Im Ausführungsbeispiel ist für jede der beiden Verstellrichtungen ein separater Verstellantrieb 2, 2` mit jeweils einem separatem Spindeltrieb, umfassend eine Gewindespindel 4, 4`, sowie eine Spindelmutter 3.

Ein Verstellantrieb 2 ist vorgesehen, mittels welchem eine Verstellung der Stelleinheit 16 gegenüber der Trageinheit 10 in Längsrichtung L erreicht werden kann. Der Verstellantrieb 2 umfasst eine Gewindespindel 4, die ein Außengewinde 42 aufweist und über ein Befestigungselement 107, der als Gelenkbolzen ausgebildet ist, mit dem Anlenkhebel 120 verbunden, welcher mit dem Mantelrohr 12 verbunden ist. Der Anlenkhebel 120 ist in einem Schlitz 110 in der Manteleinheit 104 so verschiebbar geführt, dass eine Verschiebung des Anlenkhebels 120 gegenüber der Manteleinheit 104 zu einer Verschiebung der Stelleinheit 16 gegenüber der Trageinheit 10 in Längsrichtung L führt.

Die Gewindespindel 4 ist über ein Koppelelement 6, welches auch als Kopplungselement 6 bezeichnet wird,, der als Gelenkkopf 43 ausgebildet ist, an dem Anlenkhebel 120 gehalten und erstreckt sich mit ihrer Spindelachse S in Längsrichtung L. Die Gewindespindel 4 ist in einer Spindelmutter 3 gehalten, welche ein Innengewinde 32 aufweist, das mit dem Außengewinde 42 der Gewindespindel 4 in Eingriff steht. Die Spindelmutter 3 ist drehbar, aber in Längsrichtung L ortsfest bezüglich der Manteleinheit 104 in einem Getriebegehäuse 34 gelagert, so dass eine Drehung der Spindelmutter 3 wegen des Gewindeeingriffs mit der Gewindespindel 4 zu einer Axialbewegung der Gewindespindel 4 relativ zur Spindelmutter 3 in Richtung der Spindelachse S führt. Mit anderen Worten findet durch eine Drehung der Spindelmutter 3 eine Relativbewegung zwischen Mantelrohr 12 und Manteleinheit 104 so statt, dass eine Verstellung der Position der Stelleinheit 16 gegenüber der Trageinheit 10 durch die Drehung der Spindelmutter 3 bewirkt wird.

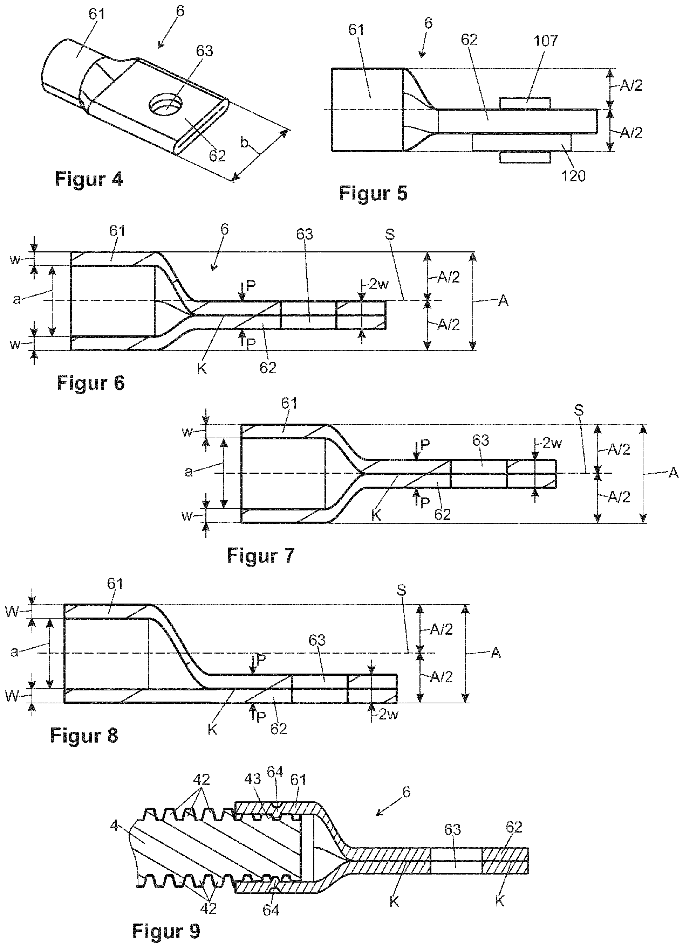

Der Verstellantrieb 2 umfasst weiterhin einen Antriebsmotor 20, auf dessen Abtriebswelle 24 eine in Figur 4 gut zu erkennende Schnecke 22 angeordnet ist. Die Schnecke 22 greift in eine Außenverzahnung 30 der Spindelmutter 3 ein, wobei die Außenverzahnung 30 als Schneckenrad ausgebildet ist. Die Spindelmutter 3 ist in einem Lager 33 in dem Getriebegehäuse 34 um die Spindelachse S drehbar gelagert. Die Rotationsachse der Schnecke 22 und die Spindelachse S der Spindelmutter 3 stehen senkrecht aufeinander, wie es von Schneckengetrieben an sich bekannt ist.

Entsprechend kann durch eine Rotation der Abtriebswelle 24 des Antriebsmotors 20 die Spindelmutter 3 rotiert werden, wodurch eine Längsverstellung der Stelleinheit 16 in Längsrichtung L gegenüber der Manteleinheit 104 und damit eine Längsverschiebung der Stelleinheit 16 gegenüber der Trageinheit 10 stattfindet.

Figur 2 zeigt eine auseinander gezogene Darstellung des Verstellantriebs 2. Deutlich erkennbar ist die Gewindespindel 4, an deren einen Ende das Koppelement 6 fest angebracht ist.

Am anderen Ende ist ein aus Kunststoff gebildetes Anschlagelement 7 fest auf der Gewindespindel 4 angebracht, wobei das Anschlagelement 7 durch partielle plastische Deformationen in Form von Einformungen 71 die mittels Heiß- bzw. Warmverstemmen eingebracht sind, auf der Gewindespindel 4 fixiert ist. Alternativ kann das Anschlagelement 7 auch aus einem metallischen Werkstoff gebildet sein, welches durch partielle plastische Deformationen auf der Gewindespindel fixiert ist.

Die Gewindespindel 4 ist im Längsschnitt in Figur 3 gezeigt. Darin ist erkennbar, wie das Koppelelement (Kopplungselement) 6 auf dem Gewinde 42 befestigt ist.

Ein erfindungsgemäßes Koppelelement (Kopplungselement) 6 wird zunächst als separates Teil gefertigt, wie es in Figur 4 einzeln gezeigt ist. Dieses ist in Figur 5 in montiertem Zustand und in Figur 6 im Längsschnitt dargestellt.

Das Koppelelement (Kopplungselement) 6 weist einen Aufnahmeabschnitt 61 und einen als Pressabschnitt 62 ausgebildeten Koppelabschnitt auf.

Der Aufnahmeabschnitt 61 ist als hülsenförmig, hohlzylindrisch mit kreisrundem Querschnitt ausgebildet, der sich längs der Spindelachse S erstreckt, mit einem kreiszylindrischen Außendurchmesser A, einer Öffnung mit kreiszylindrischem Innendurchmesser a, und einer Wandungsstärke w (Rohrwandungsstärke).

Der Koppelabschnitt ist durch einen Pressabschnitt 62 gebildet, in dem ein Rohrabschnitt mit dem ursprünglichen Querschnitt des Aufnahmeabschnitts 61 durch Ausübung von flächigem Druck in einer Pressrichtung senkrecht zur Spindelachse S, wie mit den Pfeilen P angedeutet, flach verquetscht d.h. flach umgeformt ist. Durch die dabei erfolgte plastische Verformung liegen die Wandungen nunmehr eben in der Kontaktebene K aneinander an, die parallel zur Achse S liegt. Im gezeigten Beispiel hat der Pressabschnitt 62 eine Dicke 2w, also der doppelten Wandungsstärke w, und senkrecht dazu eine Breite b, die größer ist als der Außendurchmesser A.

Erfindungsgemäß erstreckt sich die Gewindespindel 4 nur innerhalb des Aufnahmeabschnitts 61, und nicht in dem Pressabschnitt 62. Dadurch wird der Pressabschnitt 62 nur durch die flach verquetschten Wandungen des Rohrabschnitts gebildet.

Ein Verbindungsmittel umfasst eine den Pressabschnitt 62 senkrecht zur Kontaktebene K durchsetzende Öffnung 63, durch die zur Anbindung an den Anlenkhebel 120 ein Befestigungselement 107 durchgeführt ist, wie in Figur 5 gezeigt, beispielsweise ein Gelenkbolzen.

Wie in Figur 6 erkennbar ist, liegt die Achse S auf der oberen Seite des Pressabschnitts 62, hat also einen Abstand entsprechend der Wandungsstärke w zur Kontaktebene K.

Eine zweite Alternative ist wie in der Ansicht von Figur 6 in Figur 7 gezeigt. In dieser symmetrischen Ausführung verläuft die Achse S in der Kontaktebene K zwischen den gegeneinander anliegenden Wandungen des Pressabschnitts 62, der den Koppelabschnitt bildet.

Eine dritte Alternative ist wie in der Ansicht von Figur 6 in Figur 8 gezeigt. Dabei erstreckt sich der Pressabschnitt 62 tangential zum Aufnahmeabschnitt 61, so dass er in Richtung der Achse S mit dem Außenumfang des Aufnahmeabschnitts 61 fluchtet.

Figur 9 zeigt in einem Längsschnitt eine Detailansicht der Gewindespindel 4 wie in Figur 4, wie das Kopplungselement 6 auf dem Ende der Gewindespindel 4 befestigt sein kann. Dabei ist der Aufnahmeabschnitt 61 mit seiner Öffnung in Richtung der Spindelachse S stirnseitig auf das Außengewinde 42 aufgepresst. Dadurch, dass der Innendurchmesser a der Öffnung gleich groß wie oder kleiner ist als der Außendurchmesser des Außengewindes 42, wird beim Aufpressen eine kraftschlüssige Verbindung erzeugt.

Zusätzlich kann der Aufnahmeabschnitt 61 plastische Deformationen aufweisen, nämlich von außen eingepresste Einformungen 64 aufweisen, in denen die Wandung radial nach innen radial in das Außengewinde 42 plastisch eingepresst ist, wodurch im Außengewinde 42 als negativer Formabdruck jeweils eine plastische Verformung 43 auftritt. Eine Verformung 43 nimmt jeweils eine radial nach innen vorspringende Einformung 64 bezüglich Drehung um die Spindelachse S und auch bezüglich der Achsrichtung der Spindelachse S formschlüssig auf. Der Innendurchmesser a der Öffnung des Aufnahmeabschnitts 61 ist bevrozugt gleich groß wie oder größer ist als der Außendurchmesser des Außengewindes 42 und wird durch die plastische Deformation miteinander verbunden. Diese Formschlussverbindung zwischen dem Aufnahmeabschnitt 61 und der Gewindespindel 4 ist aufgrund der zusammen erfolgten plastischen Umformung im Wesentlichen spielfrei und besonders haltbar und belastbar.

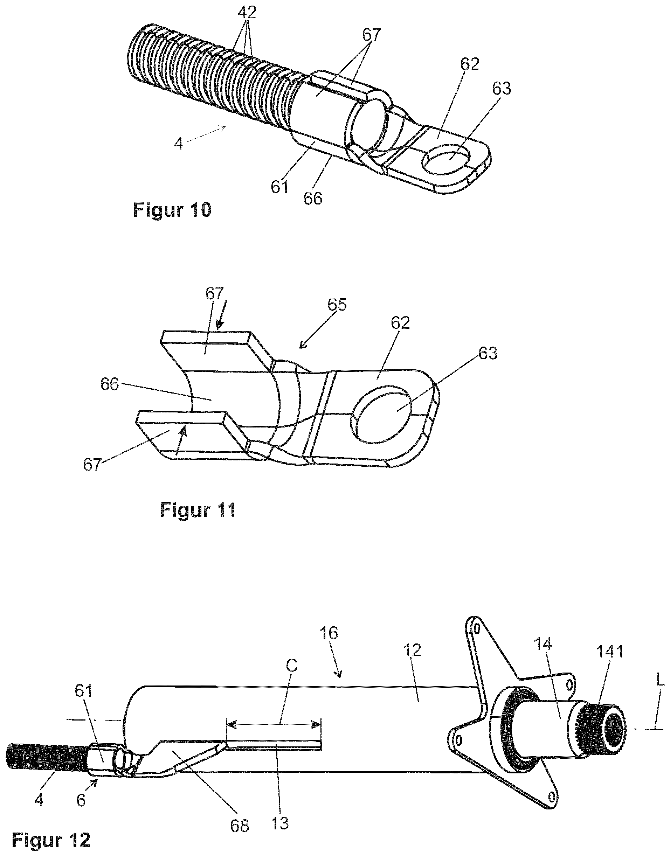

Figuren 10 und 11 zeigen eine zweite Ausführungsform eines Koppelelements 6. Figur 11 zeigt den Zustand vor der Montage, der in Figur 10 dargestellt ist.

Figur 11 zeigt einen aus einem anfangs ebenen Blech vorgeformten Blechabschnitt 65. Dieser hat einen flachen Koppelabschnitt, der mit dem Pressabschnitt 62 korrespondiert. Der Aufnahmeabschnitt 61 ist in Form einer offenen Rinne 66 vorgeformt, von deren Rändern zwei Befestigungsfahnen 67 quer abstehen. Zwischen den beiden Befestigungsfahnen 67 bleibt quer zur Längserstreckung ein freier Zugang zur Rinne 66.

Zur Verbindung wird der Gewindeabschnitt 40 in die Rinne 66 eingelegt, und anschließend werden die freien Enden der Befestigungsfahnen 67 gegeneinander umgebogen, wie in Figur 11 mit den Pfeilen angedeutet. Dadurch wird das Außengewinde 42 von dem nunmehr durch die Rinne 66 und die umgebogenen Befestigungsfahnen 67 gebildeten Rohrabschnitt, d.h. dem rohrförmigen Aufnahmeabschnitt 61umschlossen. Der Aufnahmeabschnitt 61 wird durch Crimpen mittels plastischem Verpressen von außen auf dem Außengewinde 42 der Gewindespindel 4 fixiert.

Figur 12 zeigt eine weitere Ausführung eines erfindungsgemäßen Koppelelements 6, bei dem ein Aufweitungselement 68 einstückig an den rohrförmigen Aufnahmeabschnitt 61 angeformt ist. Das Aufweitungselement 68 taucht in einen Crash-Schlitz 13 in dem Mantelrohr 12 ein, der eine Länge C hat.

Das Aufweitungselement 68 hat gegenüber dem Crash-Schlitz 13 Übermaß, ist also breiter als die Schlitzöffnung. Dadurch wird im Crashfall das Aufweitungselement 68 in Pfeilrichtung über einen Crashweg der Länge C unter plastischer Aufweitung durch den Schlitz 13 bewegt, wodurch kontinuierlich kinetische Crash-Energie absorbiert wird.

### Bezugszeichenliste

- 1: Lenksäule
- 10: Trageinheit
- 12: Mantelrohr
- 13: Crash-Schlitz
- 14: Lenkspindel
- 141: lenkradseitiges Ende
- 16: Stelleinheit
- 18: Verschwenkmechanismus
- 100: Konsole
- 102: Befestigungsbohrung
- 104: Manteleinheit
- 106: Schwenkachse
- 107: Befestigungselement
- 110: Schlitz
- 120: Anlenkhebel
- 181: Stellhebel
- 182: Gelenk
- 183: Gelenkachse
- 184: Gelenkachse
- 2, 2': Verstellantrieb
- 20,20`: Antriebsmotor
- 22: Schnecke
- 24: Abtriebswelle
- 3: Spindelmutter
- 30: Außenverzahnung
- 32: Innengewinde
- 321: Gewindegang
- 322: Gewindeflanken
- 323: Einformung
- 33: Lager
- 34: Getriebegehäuse
- 4, 4': Gewindespindel
- 40: Gewindeabschnitt
- 42: Außengewinde
- 43: Einformung
- 6: Koppelelement (Kopplungselement)
- 61: Aufnahmeabschnitt (Rohrabschnitt)
- 62: Pressabschnitt (Koppelabschnitt)
- 63: Öffnung
- 64: Einformung
- 65: Blechabschnitt
- 66: Rinne
- 67: Befestigungsfahne
- 68: Aufweitungselement
- L: Längsrichtung
- H: Höhenrichtung
- S: Spindelachse
- a: Innendurchmesser der Öffnung des Aufnahmeabschnitts 61
- A: Außendurchmesser des Aufnahmeabschnitts 61
- D: Nenndurchmesser der Gewindespindel 4
- K: Kontaktebene
- b: Breite
- w: Wandungsstärke
- C: Länge Crash-Schlitz 13

## Patentansprüche

1. Kopplungselement (6) zur Anbringung an einer Gewindespindel (4), das einen Aufnahmeabschnitt (61) aufweist, der einstückig mit einem Koppelabschnitt (62) ausgebildet ist, wobei der Aufnahmeabschnitt (61) sich hohlzylindrisch längs einer Achse (S) erstreckt mit einer axialen Aufnahmeöffnung zur Aufnahme der Gewindespindel (4), und der Koppelabschnitt (62) quer zur Achse (S) relativ zum Aufnahmeabschnitt (61) abgeflacht ist und ein Verbindungsmittel (63) aufweist, wobei der Aufnahmeabschnitt (61) und der Koppelabschnitt (62) aus einem durchgehenden, einstückigen Rohrabschnitt ausgebildet sind, wobei der Koppelabschnitt (62) einen Pressabschnitt (62) aufweist, in dem der Rohrabschnitt quer zur Achse (S) plastisch flach verquetscht ist,
wobei sich die Gewindespindel (4) ausschließlich im Bereich des Aufnahmeabschnitts (61) erstreckt,
**dadurch gekennzeichnet,**
**dass** der Pressabschnitt (62) in einer Kontaktfläche (K) gegeneinander anliegende Rohrwandungsabschnitte aufweist.

2. Kopplungselement (6) nach Anspruch 1, **dadurch gekennzeichnet, dass** die Achse (S) in der Kontaktfläche (K) liegt.

3. Kopplungselement (6) nach einem der vorangehenden Ansprüche, **dadurch gekennzeichnet, dass** der Pressabschnitt (62) zur Achse (S) parallele Außenflächen aufweist.

4. Kopplungselement (6) nach einem der vorangehenden Ansprüche, **dadurch gekennzeichnet, dass** der Pressabschnitt (62) eine Dicke (2w) aufweist, die kleiner ist als ein Durchmesser (A) des Aufnahmeabschnitts (61).

5. Kopplungselement (6) nach einem der vorangehenden Ansprüche, **dadurch gekennzeichnet, dass** der Pressabschnitt (62) eine Breite (b) hat, die größer ist als ein Durchmesser (A) des Aufnahmeabschnitts (61).

6. Kopplungselement (6) nach einem der vorangehenden Ansprüche, **dadurch gekennzeichnet, dass** das Verbindungsmittel eine quer zur Achse (S) durch den Pressabschnitt (62) durchgehende Verbindungsöffnung (63) umfasst.

7. Verfahren zur Herstellung eines Kopplungselements (6), das einen Aufnahmeabschnitt (61) aufweist, der einstückig mit einem Koppelabschnitt (62) ausgebildet ist, wobei der Aufnahmeabschnitt (61) sich hohlzylindrisch längs einer Achse (S) erstreckt mit einer axialen Aufnahmeöffnung zur Aufnahme der Gewindespindel (4), und der Koppelabschnitt (62) quer zur Achse (S) relativ zum Aufnahmeabschnitt (61) abgeflacht ist und ein Verbindungsmittel (63) aufweist,
**gekennzeichnet durch** die Schritte:
- Bereitstellen eines hohlzylindrischen Rohrabschnitts,
- Plastisches Verformen eines Endbereichs des Rohrabschnitts quer zu seiner Achse durch Zusammenpressen zwischen gegeneinander bewegten, flächenhaft erstreckten Presswerkzeugen, bis sich die Innenwandungen zumindest abschnittweise in einer Kontaktebene (K) kontaktieren, zur Ausbildung eines flachen Pressabschnitts (62),
- Einbringen eines Verbindungsmittels (63) in den Pressabschnitt (62).

8. Gewindespindel (4) für einen Spindeltrieb (2), die ein Außengewinde (42) aufweist, und auf der ein Kopplungselement (6) nach einem der Ansprüche 1 bis 6 mit einem Aufnahmeabschnitt (61) befestigt ist, der einstückig mit einem Koppelabschnitt (62) ausgebildet ist, wobei der Aufnahmeabschnitt (61) sich hohlzylindrisch längs einer Achse (S) erstreckt mit einer axialen Aufnahmeöffnung, in der ein Befestigungsabschnitt der Gewindespindel (4) koaxial aufgenommen ist, und der Koppelabschnitt (62) quer zur Achse (S) relativ zum Aufnahmeabschnitt (61) abgeflacht ist und ein Verbindungsmittel (63) aufweist,
wobei der Aufnahmeabschnitt (61) und der Koppelabschnitt (62) aus einem durchgehenden, einstückigen Rohrabschnitt ausgebildet sind, wobei der Koppelabschnitt einen Pressabschnitt (62) aufweist, in dem der Rohrabschnitt quer zur Achse (S) plastisch flach verquetscht ist,
wobei sich die Gewindespindel (4) ausschließlich im Bereich des Aufnahmeabschnitts (61) erstreckt,
**dadurch gekennzeichnet,**
**dass** der Pressabschnitt (62) in einer Kontaktfläche (K) gegeneinander anliegende Rohrwandungsabschnitte aufweist.

9. Gewindespindel (4) nach Anspruch 8, **dadurch gekennzeichnet, dass** der Aufnahmeabschnitt (61) eine plastische Deformation (52) aufweist, die mit einer plastischen Verformung (43) der Gewindespindel (4) formschlüssig verbunden ist.

10. Spindeltrieb (2) für einen Verstellantrieb zur Verstellung einer Lenksäule (1), umfassend eine drehend antreibbare Spindelmutter (3), in die eine Gewindespindel (4) nach einem der Ansprüche 8 oder 9 eingreift, die ein Außengewinde (42) aufweist, und auf der ein Kopplungselement (6) mit einem Aufnahmeabschnitt (61) befestigt ist, der einstückig mit einem Koppelabschnitt (62) ausgebildet ist, wobei der Aufnahmeabschnitt (61) sich längs einer Achse (S) erstreckt mit einer axialen Aufnahmeöffnung, in der ein Befestigungsabschnitt der Gewindespindel (4) koaxial aufgenommen ist, und der Koppelabschnitt (62) quer zur Achse (S) relativ zum Aufnahmeabschnitt (61) abgeflacht ist und ein Verbindungsmittel (63) aufweist,
wobei der Aufnahmeabschnitt (61) und der Koppelabschnitt (62) aus einem durchgehenden, einstückigen Rohrabschnitt ausgebildet sind, wobei der Koppelabschnitt einen Pressabschnitt (62) aufweist, in dem der Rohrabschnitt quer zur Achse (S) plastisch flach verquetscht ist,
wobei sich die Gewindespindel (4) ausschließlich im Bereich des Aufnahmeabschnitts (61) erstreckt,
**dadurch gekennzeichnet,**
**dass** der Pressabschnitt (62) in einer Kontaktfläche (K) gegeneinander anliegende Rohrwandungsabschnitte aufweist.

11. Lenksäule (1) für ein Kraftfahrzeug, mit einer Trageinheit (10), die an einer Fahrzeugkarosserie anbringbar ist, und von der eine Stelleinheit (16) gehalten ist, in der eine Lenkspindel (14) drehbar gelagert ist, und mit einem Verstellantrieb (2, 2'), der zwischen der Trageinheit (10) und der Stelleinheit (16) angeordnet ist, und von dem die Stelleinheit (16) relativ zur Trageinheit (10) verstellbar ist, wobei der Verstellantrieb (2) als Spindeltrieb nach Anspruch 10 ausgebildet ist, umfassend eine drehend antreibbare Spindelmutter (3), in die eine Gewindespindel (4) eingreift, die ein Außengewinde (42) aufweist, und auf der ein Kopplungselement (6) mit einem Aufnahmeabschnitt (61) befestigt ist, der einstückig mit einem Koppelabschnitt (62) ausgebildet ist, wobei der Aufnahmeabschnitt (61) sich längs einer Achse (S) erstreckt mit einer axialen Aufnahmeöffnung, in der ein Befestigungsabschnitt der Gewindespindel (4) koaxial aufgenommen ist, und der Koppelabschnitt (62) quer zur Achse (S) relativ zum Aufnahmeabschnitt (61) abgeflacht ist und ein Verbindungsmittel (63) aufweist, wobei der Aufnahmeabschnitt (61) und der Koppelabschnitt (62) aus einem durchgehenden, einstückigen Rohrabschnitt ausgebildet sind, wobei der Koppelabschnitt einen Pressabschnitt (62) aufweist, in dem der Rohrabschnitt quer zur Achse (S) plastisch flach verquetscht ist,
wobei sich die Gewindespindel (4) ausschließlich im Bereich des Aufnahmeabschnitts (61) erstreckt,
**dadurch gekennzeichnet,**
**dass** der Pressabschnitt (62) in einer Kontaktfläche (K) gegeneinander anliegende Rohrwandungsabschnitte aufweist.

12. Kopplungselement (6) zur Anbringung an einer Gewindespindel (4), das einen Aufnahmeabschnitt (61) aufweist, der einstückig mit einem Koppelabschnitt (62) ausgebildet ist, wobei der Aufnahmeabschnitt (61) sich hohlzylindrisch längs einer Achse (S) erstreckt mit einer axialen Aufnahmeöffnung zur Aufnahme der Gewindespindel (4), und der Koppelabschnitt (62) quer zur Achse (S) relativ zum Aufnahmeabschnitt (61) abgeflacht ist und ein Verbindungsmittel (63) aufweist,
**dadurch gekennzeichnet,**
**dass** der Aufnahmeabschnitt (61) und der Koppelabschnitt (62) aus einem durchgehenden, einstückigen Blechabschnitt ausgebildet sind, wobei der Aufnahmeabschnitt (61) einen Rohrabschnitt (61) aufweist, in dem der Blechabschnitt um die Achse (S) rohrförmig umgebogen ist.

13. Gewindespindel (4) für einen Spindeltrieb (2), die ein Außengewinde (42) aufweist, und auf der ein Kopplungselement (6) nach Anspruch 12 mit einem Aufnahmeabschnitt (61) befestigt ist, der einstückig mit einem Koppelabschnitt (62) ausgebildet ist, wobei der Aufnahmeabschnitt (61) sich hohlzylindrisch längs einer Achse (S) erstreckt mit einer axialen Aufnahmeöffnung, in der ein Befestigungsabschnitt der Gewindespindel (4) koaxial aufgenommen ist, und der Koppelabschnitt (62) quer zur Achse (S) relativ zum Aufnahmeabschnitt (61) abgeflacht ist und ein Verbindungsmittel (63) aufweist,
**dadurch gekennzeichnet,**
**dass** der Aufnahmeabschnitt (61) und der Koppelabschnitt (62) aus einem durchgehenden, einstückigen Blechabschnitt ausgebildet sind, wobei der Aufnahmeabschnitt (61) einen Rohrabschnitt aufweist, in dem der Blechabschnitt um die Achse (S) rohrförmig um die Gewindespindel (4) umgebogen und mit der Gewindespindel (4) verbunden ist.

14. Gewindespindel (4) nach Anspruch 13, **dadurch gekennzeichnet, dass** der Aufnahmeabschnitt (61) auf das Außengewinde (42) gecrimpt ist.

15. Lenksäule (1) für ein Kraftfahrzeug, mit einer Trageinheit (10), die an einer Fahrzeugkarosserie anbringbar ist, und von der eine Stelleinheit (16) gehalten ist, in der eine Lenkspindel (14) drehbar gelagert ist, und mit einem Verstellantrieb (2, 2'), der zwischen der Trageinheit (10) und der Stelleinheit (16) angeordnet ist, und von dem die Stelleinheit (16) relativ zur Trageinheit (10) verstellbar ist, wobei der Verstellantrieb (2) als Spindeltrieb nach Anspruch 10 ausgebildet ist, umfassend eine drehend antreibbare Spindelmutter (3), in die eine Gewindespindel (4) eingreift, die ein Außengewinde (42) aufweist, und auf der ein Kopplungselement (6) mit einem Aufnahmeabschnitt (61) befestigt ist, der einstückig mit einem Koppelabschnitt (62) ausgebildet ist, wobei der Aufnahmeabschnitt (61) sich längs einer Achse (S) erstreckt mit einer axialen Aufnahmeöffnung, in der ein Befestigungsabschnitt der Gewindespindel (4) koaxial aufgenommen ist, und der Koppelabschnitt (62) quer zur Achse (S) relativ zum Aufnahmeabschnitt (61) abgeflacht ist und ein Verbindungsmittel (63) aufweist,
**dadurch gekennzeichnet,**
**dass** der Aufnahmeabschnitt (61) und der Koppelabschnitt (62) aus einem durchgehenden, einstückigen Blechabschnitt ausgebildet sind, wobei der Aufnahmeab-schnitt (61) einen Rohrabschnitt aufweist, in dem der Blechabschnitt um die Achse (S) rohrförmig um die Gewindespindel (4) umgebogen und mit die Gewindespindel (4) verbunden ist.

16. Kopplungselement (6) nach einem der vorangehenden Ansprüche, **dadurch gekennzeichnet, dass** ein Funktionselement (68) einer Energieabsorptionseinrichtung einstückig mit dem Kopplungselement (6) ausgebildet ist.

## Claims

1. Coupling element (6) for attachment to a threaded spindle (4), which has a receiving section (61) which is formed in one piece with a coupling section (62), the receiving section (61) extending hollow-cylindrically along an axis (S) with an axial receiving opening for receiving the threaded spindle (4), and the coupling section (62) being flattened transversely to the axis (S) relative to the receiving section (61) and having a connecting means (63), wherein the receiving section (61) and the coupling section (62) are formed from a continuous, one-piece tube section, wherein the coupling section (62) has a pressing section (62) in which the tube section is plastically crushed flat transversely to the axis (S),
wherein the threaded spindle (4) extends exclusively in the region of the receiving section (61),
**characterized in**
**in that** the pressing section (62) has tube wall sections resting against one another in a contact surface (K).

2. Coupling element (6) according to claim 1, **characterized in that** the axis (S) is located in the contact surface (K).

3. Coupling element (6) according to one of the preceding claims, **characterized in that** the pressing section (62) has outer surfaces parallel to the axis (S).

4. Coupling element (6) according to one of the preceding claims, **characterized in that** the pressing section (62) has a thickness (2w) which is smaller than a diameter (A) of the receiving section (61).

5. Coupling element (6) according to one of the preceding claims, **characterized in that** the pressing section (62) has a width (b) which is greater than a diameter (A) of the receiving section (61).

6. Coupling element (6) according to one of the preceding claims, **characterized in that** the connecting means comprises a connecting opening (63) passing through the pressing section (62) transversely to the axis (S).

7. Method for producing a coupling element (6) which has a receiving section (61) which is formed in one piece with a coupling section (62), the receiving section (61) extending hollow-cylindrically along an axis (S) with an axial receiving opening for receiving the threaded spindle (4), and the coupling section (62) being flattened transversely to the axis (S) relative to the receiving section (61) and having a connecting means (63), **characterized by** the steps of:
- providing a hollow cylindrical tube section,
- plastically deforming an end region of the tube section transversely to its axis by pressing together between pressing tools which are moved towards one another and extend in a planar manner until the inner walls contact one another at least in sections in a contact plane (K), to form a flat pressing section (62),
- introducing a connecting means (63) into the pressing section (62).

8. Threaded spindle (4) for a spindle drive (2), which has an external thread (42), and on which a coupling element (6) according to one of claims 1 to 6 is fastened with a receiving section (61), which is formed integrally with a coupling section (62), wherein the receiving portion (61) extends hollow-cylindrically along an axis (S) with an axial receiving opening, in which a fastening portion of the threaded spindle (4) is coaxially received, and the coupling portion (62) is flattened transversely to the axis (S) relative to the receiving portion (61) and has a connecting means (63),
wherein the receiving section (61) and the coupling section (62) are formed from a continuous, one-piece tube section, wherein the coupling section has a pressing section (62) in which the tube section is plastically crushed flat transversely to the axis (S),
wherein the threaded spindle (4) extends exclusively in the region of the receiving section (61),
**characterized in**
**in that** the pressing section (62) has tube wall sections resting against one another in a contact surface (K).

9. Threaded spindle (4) according to claim 8, **characterized in that** the receiving section (61) has a plastic deformation (52) which is positively connected to a plastic deformation (43) of the threaded spindle (4).

10. Spindle drive (2) for an adjusting drive for adjusting a steering column (1), comprising a rotatably drivable spindle nut (3), in which a threaded spindle (4) according to one of claims 8 or 9 engages, which has an external thread (42), and on which a coupling element (6) with a receiving section (61) is fastened, which is formed in one piece with a coupling section (62), wherein the receiving section (61) extends along an axis (S) with an axial receiving opening in which a fastening section of the threaded spindle (4) is coaxially received, and the coupling section (62) is flattened transversely to the axis (S) relative to the receiving section (61) and has a connecting means (63), wherein the receiving section (61) and the coupling section (62) are formed from a continuous, one-piece tube section, wherein the coupling section has a pressing section (62) in which the tube section is plastically crushed flat transversely to the axis (S),
wherein the threaded spindle (4) extends exclusively in the region of the receiving section (61),
**characterized in**
**in that** the pressing section (62) has tube wall sections resting against one another in a contact surface (K).

11. Steering column (1) for a motor vehicle, having a support unit (10) which can be attached to a vehicle body and by which an adjusting unit (16) is held, in which an adjusting unit a steering spindle (14) is rotatably mounted, and having an adjusting drive (2, 2'), which is arranged between the support unit (10) and the adjusting unit (16), and by which the adjusting unit (16) can be adjusted relative to the support unit (10), the adjusting drive (2) being designed as a spindle drive according to claim 10, comprising a spindle nut (3) which can be driven in rotation, in which a threaded spindle (4) engages, which has an external thread (42), and on which a coupling element (6) with a receiving section (61) is fastened, which is formed in one piece with a coupling section (62), wherein the receiving portion (61) extends along an axis (S) with an axial receiving opening, in which a fastening portion of the threaded spindle (4) is coaxially received, and the coupling portion (62) is flattened transversely to the axis (S) relative to the receiving portion (61) and has a connecting means (63),
wherein the receiving section (61) and the coupling section (62) are formed from a continuous, one-piece tube section, wherein the coupling section has a pressing section (62) in which the tube section is plastically crushed flat transversely to the axis (S),
wherein the threaded spindle (4) extends exclusively in the region of the receiving section (61),
**characterized in**
**in that** the pressing section (62) has tube wall sections resting against one another in a contact surface (K).

12. Coupling element (6) for attachment to a threaded spindle (4), which has a receiving section (61) which is formed in one piece with a coupling section (62), the receiving section (61) extending hollow-cylindrically along an axis (S) with an axial receiving opening for receiving the threaded spindle (4), and the coupling section (62) being flattened transversely to the axis (S) relative to the receiving section (61) and having a connecting means (63),
**characterized in**
**in that** the receiving section (61) and the coupling section (62) are formed from a continuous, one-piece sheet metal section, the receiving section (61) having a tubular section (61) in which the sheet metal section is bent in a tubular manner about the axis (S).

13. Threaded spindle (4) for a spindle drive (2), which has an external thread (42), and on which a coupling element (6) according to claim 12 is fastened with a receiving section (61) which is formed integrally with a coupling section (62), wherein the receiving portion (61) extends hollow-cylindrically along an axis (S) with an axial receiving opening, in which a fastening portion of the threaded spindle (4) is coaxially received, and the coupling portion (62) is flattened transversely to the axis (S) relative to the receiving portion (61) and has a connecting means (63),
**characterized in**
**in that** the receiving section (61) and the coupling section (62) are formed from a continuous, one-piece sheet metal section, the receiving section (61) having a tubular section in which the sheet metal section is bent around the threaded spindle (4) in a tubular manner about the axis (S) and is connected to the threaded spindle (4).

14. Threaded spindle (4) according to claim 13, **characterized in that** the receiving portion (61) is crimped onto the external thread (42).

15. Steering column (1) for a motor vehicle, having a support unit (10) which can be attached to a vehicle body and by which an adjusting unit (16) is held, in which an adjusting unit a steering spindle (14) is rotatably mounted, and having an adjusting drive (2, 2'), which is arranged between the support unit (10) and the adjusting unit (16), and by which the adjusting unit (16) can be adjusted relative to the support unit (10), the adjusting drive (2) being designed as a spindle drive according to claim 10, comprising a spindle nut (3) which can be driven in rotation, in which a threaded spindle (4) engages, which has an external thread (42), and on which a coupling element (6) with a receiving section (61) is fastened, which is formed in one piece with a coupling section (62), wherein the receiving portion (61) extends along an axis (S) with an axial receiving opening, in which a fastening portion of the threaded spindle (4) is coaxially received, and the coupling portion (62) is flattened transversely to the axis (S) relative to the receiving portion (61) and has a connecting means (63),
**characterized in**
**in that** the receiving section (61) and the coupling section (62) are formed from a continuous, one-piece sheet metal section, the receiving section (61) having a tubular section in which the sheet metal section is bent around the threaded spindle (4) in a tubular manner about the axis (S) and is connected to the threaded spindle (4).

16. Coupling element (6) according to one of the preceding claims, **characterized in that** a functional element (68) of an energy absorption device is formed integrally with the coupling element (6).

## Revendications

1. Elément d'accouplement (6) destiné à être monté sur une broche filetée (4), qui présente une section de réception (61) qui est réalisée d'un seul tenant avec une section d'accouplement (62), la section de réception (61) s'étendant en forme de cylindre creux le long d'un axe (S) avec une ouverture de réception axiale pour recevoir la broche filetée (4), et la section d'accouplement (62) étant aplatie transversalement à l'axe (S) par rapport à la section de réception (61) et présentant un moyen de liaison (63), la section de réception (61) et la section de couplage (62) étant formées d'une section de tube continue d'une seule pièce, la section de couplage (62) présentant une section de compression (62) dans laquelle la section de tube est écrasée plastiquement à plat transversalement à l'axe (S),
la broche filetée (4) s'étendant exclusivement dans la zone de la section de réception (61),
**caractérisé en ce que**
**en ce que** la section de compression (62) présente des sections de paroi de tube appliquées les unes contre les autres dans une surface de contact (K).

2. Elément de couplage (6) selon la revendication 1, **caractérisé en ce que** l'axe (S) est situé dans la surface de contact (K).

3. Elément de couplage (6) selon l'une des revendications précédentes, **caractérisé en ce que** la section de compression (62) présente des surfaces extérieures parallèles à l'axe (S).

4. Elément de couplage (6) selon l'une des revendications précédentes, **caractérisé en ce que** la portion de compression (62) présente une épaisseur (2w) inférieure à un diamètre (A) de la portion de réception (61).

5. Elément de couplage (6) selon l'une des revendications précédentes, **caractérisé en ce que** la section de compression (62) a une largeur (b) supérieure à un diamètre (A) de la partie de réception (61).

6. Elément de couplage (6) selon l'une des revendications précédentes, **caractérisé en ce que** le moyen de liaison comprend une ouverture de liaison (63) traversant la section de compression (62) transversalement à l'axe (S).

7. Procédé de fabrication d'un élément de couplage (6) qui présente une section de réception (61) qui est réalisée d'un seul tenant avec une section de couplage (62), la section de réception (61) s'étendant en forme de cylindre creux le long d'un axe (S) avec une ouverture de réception axiale pour recevoir la broche filetée (4), et la section de couplage (62) étant aplatie transversalement à l'axe (S) par rapport à la section de réception (61) et présentant un moyen de liaison (63),
**caractérisé par** les étapes suivantes :
- préparation d'un tronçon de tube cylindrique creux,
- déformation plastique d'une zone d'extrémité du tronçon de tube transversalement à son axe par compression entre des outils de compression déplacés l'un contre l'autre et s'étendant en surface, jusqu'à ce que les parois intérieures se contactent au moins par sections dans un plan de contact (K), pour former un section de compression plat (62),
- introduction d'un moyen de liaison (63) dans le section de compression (62).

8. Broche filetée (4) pour un entraînement à broche (2), qui présente un filetage extérieur (42), et sur laquelle est fixé un élément de couplage (6) selon l'une des revendications 1 à 6 avec une section de réception (61) qui est réalisée d'une seule pièce avec une section de couplage (62), la portion de réception (61) s'étendant en forme de cylindre creux le long d'un axe (S) avec une ouverture de réception axiale dans laquelle une portion de fixation de la tige filetée (4) est reçue coaxialement, et la portion de couplage (62) est aplatie transversalement à l'axe (S) par rapport à la portion de réception (61) et comporte un moyen de liaison (63),
la section de réception (61) et la section de couplage (62) étant formées d'une section de tube continue d'une seule pièce, la section de couplage présentant une section de compression (62) dans laquelle la section de tube est écrasée plastiquement à plat transversalement à l'axe (S),
la broche filetée (4) s'étendant exclusivement dans la zone de la section de réception (61),
**caractérisé en ce que**
**en ce que** la section de compression (62) présente des sections de paroi de tube appliquées les unes contre les autres dans une surface de contact (K).

9. Broche filetée (4) selon la revendication 8, **caractérisée en ce que** la section de réception (61) présente une déformation plastique (52) qui est reliée par complémentarité de forme à une déformation plastique (43) de la broche filetée (4).

10. Entraînement à broche (2) pour un entraînement de réglage pour le réglage d'une colonne de direction (1), comprenant un écrou de broche (3) pouvant être entraîné en rotation, dans lequel s'engage une broche filetée (4) selon l'une des revendications 8 ou 9, qui présente un filetage extérieur (42), et sur lequel est fixé un élément de couplage (6) avec une section de réception (61), qui est réalisée d'une seule pièce avec une partie de couplage (62), la partie de réception (61) s'étendant le long d'un axe (S) avec une ouverture de réception axiale dans laquelle une partie de fixation de la tige filetée (4) est reçue coaxialement, et la partie de couplage (62) étant aplatie transversalement à l'axe (S) par rapport à la partie de réception (61) et présentant un moyen de liaison (63),
la section de réception (61) et la section de couplage (62) étant formées d'une section de tube continue d'une seule pièce, la section de couplage présentant une section de compression (62) dans laquelle la section de tube est écrasée plastiquement à plat transversalement à l'axe (S),
la broche filetée (4) s'étendant exclusivement dans la zone de la section de réception (61),
**caractérisé en ce que**
**en ce que** la section de compression (62) présente des sections de paroi de tube appliquées les unes contre les autres dans une surface de contact (K).

11. Colonne de direction (1) pour un véhicule automobile, comprenant une unité de support (10) qui peut être montée sur une carrosserie de véhicule et par laquelle est maintenue une unité de réglage (16) dans laquelle un arbre de direction (14) est monté à rotation, et comprenant un entraînement de réglage (2, 2'), qui est disposé entre l'unité de support (10) et l'unité de réglage (16), et par lequel l'unité de réglage (16) est réglable par rapport à l'unité de support (10), l'entraînement de réglage (2) étant conçu comme un entraînement à vis selon la revendication 10, comprenant un écrou de vis (3) pouvant être entraîné en rotation, dans lequel s'engage une broche filetée (4) qui présente un filetage extérieur (42) et sur lequel est fixé un élément de couplage (6) avec une section de réception (61) qui est réalisée d'une seule pièce avec une section de couplage (62), la section de réception (61) s'étendant le long d'un axe (S) avec une ouverture de réception axiale dans laquelle une section de fixation de la tige filetée (4) est reçue coaxialement, et la section de couplage (62) étant aplatie transversalement à l'axe (S) par rapport à la section de réception (61) et présentant un moyen de liaison (63),
la section de réception (61) et la section de couplage (62) étant formées d'une section de tube continue d'une seule pièce, la section de couplage présentant une section de compression (62) dans laquelle la section de tube est écrasée plastiquement à plat transversalement à l'axe (S),
la broche filetée (4) s'étendant exclusivement dans la zone de la section de réception (61),
**caractérisé en ce que**
**en ce que** la section de compression (62) présente des sections de paroi de tube appliquées les unes contre les autres dans une surface de contact (K).

12. Elément d'accouplement (6) destiné à être monté sur une broche filetée (4), qui présente une section de réception (61) qui est réalisée d'un seul tenant avec une section d'accouplement (62), la section de réception (61) s'étendant en forme de cylindre creux le long d'un axe (S) avec une ouverture de réception axiale pour recevoir la broche filetée (4), et la section d'accouplement (62) étant aplatie transversalement à l'axe (S) par rapport à la section de réception (61) et présentant un moyen de liaison (63),
**caractérisé en ce que**
**en ce que** la section de réception (61) et la section de couplage (62) sont réalisées à partir d'une section de tôle continue d'une seule pièce, la section de réception (61) présentant une section tubulaire (61) dans laquelle la section de tôle est repliée en forme de tube autour de l'axe (S).

13. Broche filetée (4) pour un entraînement à broche (2), qui présente un filetage extérieur (42), et sur laquelle est fixé un élément de couplage (6) selon la revendication 12 avec une section de réception (61) qui est réalisée d'une seule pièce avec une section de couplage (62), la section de réception (61) s'étendant en forme de cylindre creux le long d'un axe (S) avec une ouverture de réception axiale dans laquelle une section de fixation de la tige filetée (4) est reçue coaxialement, et la section de couplage (62) est aplatie transversalement à l'axe (S) par rapport à la section de réception (61) et présente un moyen de liaison (63),
**caractérisé en ce que**
**en ce que** la section de réception (61) et la section de couplage (62) sont réalisées à partir d'une section de tôle continue d'une seule pièce, la section de réception (61) présentant une section tubulaire dans laquelle la section de tôle est repliée en forme de tube autour de l'axe (S) autour de la broche filetée (4) et est reliée à la broche filetée (4).

14. Broche filetée (4) selon la revendication 13, **caractérisée en ce que** la section de réception (61) est sertie sur le filetage extérieur (42).

15. Colonne de direction (1) pour un véhicule automobile, comprenant une unité de support (10) qui peut être montée sur une carrosserie de véhicule et par laquelle est maintenue une unité de réglage (16) dans laquelle un arbre de direction (14) est monté à rotation, et comprenant un entraînement de réglage (2, 2'), qui est disposé entre l'unité de support (10) et l'unité de réglage (16), et par lequel l'unité de réglage (16) est réglable par rapport à l'unité de support (10), l'entraînement de réglage (2) étant conçu comme un entraînement à vis selon la revendication 10, comprenant un écrou de vis (3) pouvant être entraîné en rotation, dans lequel s'engage une broche filetée (4) qui présente un filetage extérieur (42) et sur lequel est fixé un élément de couplage (6) avec une section de réception (61) qui est réalisée d'une seule pièce avec une section de couplage (62), la section de réception (61) s'étendant le long d'un axe (S) avec une ouverture de réception axiale dans laquelle une section de fixation de la broche filetée (4) est reçue coaxialement, et la section de couplage (62) étant aplatie transversalement à l'axe (S) par rapport à la section de réception (61) et présentant un moyen de liaison (63),
**caractérisé en ce que**
**en ce que** la section de réception (61) et la section de couplage (62) sont réalisées à partir d'une section de tôle continue d'une seule pièce, la section de réception (61) présentant une section tubulaire dans laquelle la section de tôle est repliée en forme de tube autour de l'axe (S) autour de la broche filetée (4) et est reliée à la broche filetée (4).

16. Elément de couplage (6) selon l'une des revendications précédentes, **caractérisé en ce qu'**un élément fonctionnel (68) d'un dispositif d'absorption d'énergie est formé d'un seul tenant avec l'élément de couplage (6).
